# FASCICULE DE BREVET EUROPEEN

(11) **EP 3 173 648 B1**
(45) Date de publication et mention de la délivrance du brevet: **25.04.2018**
(21) Numéro de dépôt: 16197538.8
(22) Date de dépôt: 07.11.2016
(51) Int. Cl.: F16D 13/75, F16D 21/06

(54) **DISPOSITIF D'EMBRAYAGE À RATTRAPAGE D'USURE, NOTAMMENT POUR VÉHICULE AUTOMOBILE**
KUPPLUNGSVORRICHTUNG MIT VERSCHLEISSAUSGLEICH, INSBESONDERE FÜR KRAFTFAHRZEUG
CLUTCH DEVICE WITH WEAR COMPENSATION, IN PARTICULAR FOR MOTOR VEHICLE

(30) Priorité: 26.11.2015 FR 1561424
(43) Date de publication de la demande: 31.05.2017
(73) Titulaire: Valeo Embrayages, 80009 Amiens Cedex 2 (FR)
(72) Inventeur: LEBAS, Gilles, 80800 VILLERS BRETONNEUX (FR); LAFORGE, Thibault, 80670 PERNOIS (FR); COMMEINE, Emmanuel, 80290 COURCELLES SOUS MOYENCOURT (FR)
(74) Mandataire: Cardon, Nicolas

(56) Documents cités:
- FR-A1- 2 726 872
- FR-A1- 2 780 119
- FR-A1- 2 815 098
- FR-A1- 3 009 592

## Description

La présente invention concerne un dispositif d'embrayage à rattrapage d'usure, notamment pour véhicule automobile.

Un dispositif d'embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis au travers du dispositif d'embrayage.

Un dispositif d'embrayage à rattrapage d'usure est connu du document FR 2 780 119. Ce dispositif comporte un couvercle à l'intérieur duquel est monté un plateau de pression destiné à venir en appui sur un disque de friction, un diaphragme intercalé entre le couvercle et le plateau de pression, servant à l'actionnement du plateau de pression entre une position totalement embrayée dans laquelle le dit plateau de pression est poussé contre le disque de friction, et une position totalement débrayée dans laquelle ledit plateau de pression est écarté du disque de friction par l'intermédiaire de moyens de rappel du plateau de pression.

Des moyens de rattrapage de l'usure du disque de friction sont intercalés entre le diaphragme et le plateau de pression, et comprennent au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position angulaire de la rampe par rapport à la contre-rampe.

Le dispositif comporte en outre des moyens de détection de l'usure aptes à autoriser le déplacement de l'organe de rattrapage mobile en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage et comportant une rampe coopérant avec une contre-rampe tournée du côté du plateau de pression.

Le dispositif comporte enfin un organe presseur venant contraindre les rampes desdits organes mobiles contre les contre-rampes associées, l'organe presseur étant apte à coopérer avec une butée fixe, de manière à libérer lesdits organes mobiles lorsqu'une usure du disque de friction est détectée.

L'organe de rattrapage mobile est sollicité à l'aide d'un ressort, de façon à rattraper le jeu entre celui-ci et l'organe presseur, lorsque ledit organe de rattrapage mobile est libéré par l'organe presseur et par le diaphragme. Par ailleurs, l'organe de détection mobile est sollicité par un autre ressort de façon à rattraper le jeu entre celui-ci et l'organe presseur, lorsque ledit organe de détection mobile est libéré par l'organe presseur et par le diaphragme.

En fonctionnement, l'ensemble est soumis, de façon alternée, à des phases successives d'embrayage et de débrayage.

En phase d'embrayage, le diaphragme appuie sur le plateau de pression, par l'intermédiaire de l'organe de rattrapage de jeu. En phase de débrayage, le plateau de pression est rappelé vers sa position de débrayage, par l'intermédiaire de moyens de rappel prenant généralement la forme de languettes élastiquement déformables.

Lorsque le disque de friction n'est pas usé et que les contre-matériaux des plateaux de pression et de réaction ne sont pas usés, l'organe presseur maintient constamment l'organe de détection et l'organe de rattrapage en appui sur le disque de pression : lesdits organes sont immobilisés.

En cas d'usure, l'organe presseur vient en appui sur la butée et un jeu se crée entre l'organe presseur et l'organe de détection. Comme ce dernier est contraint par un ressort, il est déplacé de façon à combler le jeu précité. En position embrayée, l'effort appliqué par le diaphragme sur l'organe de rattrapage empêche le déplacement de ce dernier, par appui et frottement sur le plateau de pression. Ensuite, lorsque le diaphragme est déplacé dans sa position débrayée, les languettes de rappel du plateau de pression tendent à plaquer le plateau de pression contre l'organe de rattrapage de jeu, et l'organe de rattrapage de jeu contre le diaphragme. L'effort exercé par les languettes de rappel est relativement faible de façon à autoriser, malgré les frottements en jeu, un déplacement de l'organe de rattrapage de jeu, sous l'effet de la contrainte appliquée par le ressort correspondant. Ce déplacement permet de rattraper le jeu entre l'organe presseur et l'organe de rattrapage. On rattrape ainsi l'usure du plateau de friction ainsi que l'usure des contre-matériaux des plateaux de pression et de réaction associés.

Un tel fonctionnement nécessite notamment l'utilisation de moyens de rappel du plateau de pression exerçant des efforts relativement faibles, pour permettre le déplacement de l'organe de rattrapage malgré les frottements en jeu. Ceci nuit au fonctionnement car de tels moyens de rappel peuvent transmettre des vibrations axiales et générer des phénomènes de pompage du plateau de pression.

Afin de remédier à cet inconvénient, la demande de brevet FR 3 009 592, au nom de la Demanderesse, propose un dispositif d'embrayage à rattrapage d'usure, notamment pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression. Le dispositif d'embrayage comprend un mécanisme de rattrapage d'usure comportant :
- des moyens de rattrapage de l'usure du disque de friction étant intercalés entre le diaphragme et le plateau de pression, lesdits moyens de rattrapage d'usure comportant au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position de la rampe par rapport à la contre-rampe,
- des moyens de détection de l'usure aptes à autoriser le déplacement dudit organe de rattrapage mobile en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté du plateau de pression,
- au moins un organe presseur venant contraindre au moins la rampe de l'organe de détection contre la contre-rampe associée, l'organe presseur étant apte à coopérer avec une butée fixe de manière à libérer lesdits organes mobiles lorsqu'une usure du disque de friction est détectée,

- l'organe de rattrapage mobile étant sollicité de façon à se déplacer lorsque ledit organe de rattrapage mobile est libéré par le diaphragme,
- l'organe de détection mobile étant sollicité de façon à se déplacer et rattraper, au moins en partie, le jeu entre celui-ci et l'organe presseur, lorsque ledit organe de détection mobile est libéré par l'organe presseur et par le diaphragme.

De plus, le diaphragme libère l'organe de détection mobile et empêche le déplacement de l'organe de rattrapage mobile, en position totalement embrayée, et le diaphragme libère l'organe de rattrapage mobile et empêche le déplacement de l'organe de détection mobile, en position totalement débrayée, le diaphragme venant toujours en appui sur l'un au moins desdits organes mobiles entre ses positions totalement embrayée et totalement débrayée.

De cette manière, les moyens de rappel du plateau de pression peuvent exercer un effort important, cet effort étant repris par l'organe de rattrapage mobile puis par le diaphragme, ou par l'organe de détection mobile puis par le diaphragme, en fonction de la position du diaphragme. En effet, lors de leurs déplacements, lesdits organes mobiles ne sont pas soumis à l'effort exercé par les moyens de rappel du plateau de pression et il est donc possible de solliciter aisément leur déplacement, en cas d'usure.

Comme indiqué précédemment, le fait de disposer de moyens de rappel du plateau de pression exerçant un effort important, tels par exemple que des languettes ressorts ayant une forte raideur, permet de limiter la transmission des vibrations axiales et d'éviter les phénomènes de pompage du plateau de pression.

L'organe de détection mobile et l'organe de rattrapage mobile sont sollicités par des organes élastiques, par exemple des ressorts de traction.

En particulier, au moins un premier ressort de traction s'étendant circonférentiellement est monté entre l'organe de détection et le plateau de pression, ou entre l'organe de détection et un couvercle couplé en rotation au plateau de pression. Des seconds ressorts de traction s'étendant circonférentiellement sont montés entre l'organe de détection et l'organe de rattrapage. Ces seconds ressorts assurent la fonction de motorisation de l'organe de rattrapage par rapport à l'organe de détection.

La demande de brevet FR 3 009 592 applique également de tels moyens de rattrapage d'usure à un double embrayage.

On rappelle qu'un double embrayage permet notamment de coupler alternativement l'arbre du moteur du véhicule avec deux arbres coaxiaux d'entrée d'une boîte de vitesses, qui peut être du type robotisée.

Ainsi, un double embrayage permet de changer de rapport de vitesses tout en maintenant la transmission d'un couple moteur aux roues du véhicule. En effet, les deux embrayages sont associés respectivement à des rapports de vitesses pairs et impairs. Lors d'un changement de rapport de vitesses, un premier embrayage est débrayé alors que le second embrayage est embrayé, si bien que le couple moteur est transféré progressivement du premier au second embrayage.

Chaque embrayage comprend un mécanisme comportant un diaphragme destiné à coopérer avec un plateau de pression solidaire en rotation du couvercle et de l'arbre du moteur. Chaque diaphragme est déplaçable au moyen d'une butée d'embrayage correspondante, entre une position de repos et une position active. Selon le type d'embrayage, la position active du diaphragme correspond à un couplage ou à un découplage des arbres du moteur et de la boîte de vitesses et la position de repos du diaphragme correspond à un découplage ou un couplage de ces arbres. On parle alors respectivement d'embrayage normalement ouvert et d'embrayage normalement fermé.

Pour des raisons de sécurité, l'un au moins des embrayages est du type normalement ouvert.

La butée d'embrayage est commandée par un actionneur piloté par un calculateur électronique afin d'exercer une force prédéterminée sur le diaphragme et de le déplacer sur une distance donnée.

Le plateau de pression de chaque embrayage, sollicité par le diaphragme correspondant, est destiné à serrer un disque de friction sur un plateau de réaction correspondant. Un plateau de réaction peut être prévu pour chaque embrayage. En variante, on utilise un seul plateau de réaction commun aux deux embrayages, monté entre les deux disques de friction.

Chaque disque de friction est lié en rotation à un arbre d'entrée de la boîte de vitesses et chaque plateau de réaction est par exemple solidaire en rotation d'un volant lié à l'arbre moteur. Ainsi, le serrage d'un disque de friction entre les plateaux de pression et de réaction correspondants permet la transmission d'un couple entre l'arbre moteur et l'arbre de la boîte de vitesses associés.

Comme précédemment, l'utilisation des embrayages provoque une usure des garnitures de friction des disques de friction ainsi que des contre-matériaux des plateaux de pression et de réaction associés. Ceci se traduit par une variation de la position de chaque plateau de pression par rapport au diaphragme associé et/ou au plateau de réaction, générant une variation de l'effort de serrage du disque de friction et une modification du point de léchage et de la course à la butée d'embrayage. Dans ce cas, le point de léchage est la position à partir de laquelle une partie du couple du moteur est transmis à l'arbre de la boîte de vitesses lors de la fermeture de l'embrayage.

De manière générale, une telle usure est plus présente au niveau du disque de friction et des plateaux de pression et de réaction appartenant au premier embrayage, c'est-à-dire à l'embrayage associé aux rapports de vitesses impairs. Ainsi, lorsque le double embrayage ne comporte qu'un seul mécanisme de rattrapage d'usure selon l'invention, celui-ci forme de préférence une partie du premier embrayage. Bien entendu, le double embrayage selon l'invention peut comporter à la fois des mécanismes de rattrapage d'usure équipant le premier embrayage et un mécanisme équipant le second embrayage.

La demande de brevet FR 3 009 592 divulgue en particulier l'utilisation d'un premier mécanisme de rattrapage d'usure équipant le premier embrayage et un second mécanisme de rattrapage d'usure équipant le second embrayage.

Dans cette demande de brevet est décrit un double embrayage comportant un plateau de réaction destiné à être couplé en rotation à un arbre menant, un premier et un second disque de friction, destinés à être couplés respectivement à un premier et un second arbres menés, un premier et un second plateau de pression, actionnés respectivement par un premier et un second diaphragme de façon à serrer ou libérer le premier et le second disque de friction sur le plateau de réaction, le premier plateau de pression étant relié fixement à un couvercle mobile en translation par rapport au plateau de réaction, et étant actionné par appui du premier diaphragme sur le couvercle mobile, des premiers moyens de détection et de rattrapage de l'usure du premier disque de friction étant intercalés entre le premier diaphragme et le couvercle mobile, des seconds moyens de détection et de rattrapage de l'usure du second disque de friction, étant intercalés entre le second diaphragme et le second plateau de pression

En fonctionnement, le couvercle mobile est soumis à des contraintes mécaniques importantes pouvant générer des déformées rendant difficile le bon positionnement des éléments constitutifs des premiers moyens de détection et de rattrapage d'usure. Ceci peut affecter de manière sensible le bon fonctionnement des premiers moyens de détection et de rattrapage d'usure.

L'invention propose un dispositif d'embrayage à rattrapage d'usure visant à garantir la bonne position des organes de détection et de rattrapage d'usure afin d'éviter toute surcompensation ou sous-compensation de l'usure.

A cet effet, elle propose un dispositif d'embrayage à rattrapage d'usure, notamment pour véhicule automobile, comportant :
- un plateau de réaction destiné à être couplé en rotation à un arbre menant, autour d'un axe de rotation,
- un disque de friction portant des garnitures de friction, destiné à être couplé à un arbre mené,
- un plateau de pression actionné par un diaphragme de façon à serrer ou libérer le disque de friction sur le plateau de réaction,
- des moyens de détection et de rattrapage d'usure, aptes à rattraper l'usure du disque de friction, les moyens de détection et de rattrapage d'usure étant intercalés entre une partie fixe par rapport au plateau de réaction, par exemple un couvercle, et le plateau de pression, lesdits moyens de détection et de rattrapage d'usure comportant :
   des moyens de rattrapage d'usure intercalés entre le diaphragme et ladite partie fixe ou entre le diaphragme et le plateau de pression, lesdits moyens de rattrapage d'usure comportant au moins un organe de rattrapage mobile dans une plage déterminée et comportant une rampe coopérant avec une contre-rampe tournée du côté de la partie fixe ou du plateau de pression, de façon à ajuster la distance entre le diaphragme et la partie fixe, ou respectivement entre le diaphragme et le plateau de pression et compenser l'usure correspondante en fonction de la position de la rampe par rapport à la contre-rampe,
   des moyens de détection de l'usure aptes à autoriser le déplacement dudit organe de rattrapage mobile en cas d'usure et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté de la partie fixe ou du plateau de pression,
   au moins un organe presseur venant contraindre au moins la rampe de l'organe de détection contre la contre-rampe associée, l'organe presseur étant apte à coopérer avec une butée fixe de manière à libérer l'organe de détection lorsqu'une usure est détectée,
   l'organe de rattrapage mobile étant sollicité de façon à se déplacer lorsque ledit organe de rattrapage mobile est libéré par le diaphragme,
   l'organe de détection mobile étant sollicité de façon à se déplacer et à rattraper, au moins en partie, le jeu entre celui-ci et l'organe presseur, lorsque ledit organe de détection mobile est libéré par l'organe presseur et par le diaphragme,
   caractérisé en ce qu'il comporte un organe de butée relié à l'organe presseur, l'organe de butée étant conçu pour écarter l'organe presseur de l'organe de détection et/ou de l'organe de rattrapage en cas d'usure, l'organe de butée étant relié à l'organe presseur dans une zone située radialement entre l'organe de détection et de l'organe de rattrapage.

L'organe de butée étant relié à l'organe presseur dans une zone située entre l'organe de détection et de l'organe de rattrapage, on limite l'effet de basculement de l'organe presseur, un tel basculement ayant une influence sur les positions des zones d'appui réelles de l'organe presseur sur l'organe de détection et/ou sur l'organe de rattrapage. La caractéristique précitée permet ainsi de maîtriser la position desdits organes mobiles, de façon à garantir le bon fonctionnement des moyens de détection et de rattrapage d'usure correspondants et éviter une surcompensation ou une sous-compensation de l'usure.

L'organe de butée peut être relié à l'organe presseur dans une zone située radialement à mi-distance entre l'organe de détection et de l'organe de rattrapage.

L'organe presseur peut exercer un effort presseur réparti entre l'organe de détection et l'organe de rattrapage et la composante axiale de cet effort suivant l'axe X peut être appliquée sur un rayon d'application situé entre l'organe de détection et l'organe de rattrapage.

L'organe de rattrapage mobile et l'organe de détection mobile peuvent être concentriques.

Par ailleurs, l'organe de butée peut comporter une extrémité reliée à une partie fixe ou mobile du dispositif d'embrayage, et une extrémité reliée à l'organe presseur.

L'organe de détection et l'organe de rattrapage, de forme générale circulaire, peuvent comprendre au moins une zone pourvue de renflements dans laquelle lesdits organes mobiles sont localement écartés l'un de l'autre dans la direction radiale, l'organe presseur venant appuyer sur les extrémités correspondantes des organes mobiles au niveau de ladite zone pourvue de renflements.

L'extrémité de l'organe de butée qui est reliée à l'organe presseur peut être logée dans ladite zone pourvue de renflements.

L'organe presseur peut comporter au moins une languette élastique dont une extrémité est apte à venir en appui sur l'organe de détection mobile ou sur l'organe de rattrapage mobile correspondant.

L'invention concerne également un double embrayage à rattrapage d'usure, notamment pour véhicule automobile, caractérisé en ce qu'il comporte au moins un dispositif d'embrayage du type précité, le double embrayage comportant :
- au moins un plateau de réaction destiné à être couplé en rotation à un arbre menant,
- un premier et un second disques de friction portant des garnitures de friction, destinés à être couplés respectivement à un premier et un second arbre mené,
- un premier et un second plateau de pression actionnés respectivement par un premier et un second diaphragme de façon à serrer ou libérer le premier et le second disque de friction sur le plateau de réaction, le premier plateau de pression étant relié fixement à un couvercle mobile en translation par rapport au plateau de réaction, et étant actionné par appui du premier diaphragme sur le couvercle mobile,
- un couvercle fixe, fixé au plateau de réaction et logeant le second plateau de pression, le second disque de friction et/ou le second diaphragme,
- des premiers moyens de détection et de rattrapage d'usure, aptes à rattraper l'usure du premier disque de friction, les premiers moyens de détection et de rattrapage d'usure étant montés entre le premier diaphragme et le couvercle fixe,
- des seconds moyens de détection et de rattrapage d'usure, aptes à rattraper l'usure du second disque de friction, les seconds moyens de détection et de rattrapage d'usure étant montés entre le second diaphragme et le second plateau de pression,
les premiers moyens de détection et de rattrapage d'usure et les seconds moyens de détection et de rattrapage d'usure comportant chacun :
des moyens de rattrapage d'usure intercalés entre le premier diaphragme et le couvercle fixe, ou respectivement entre le second diaphragme et le second plateau de pression, lesdits moyens de rattrapage d'usure comportant au moins un organe de rattrapage mobile dans une plage déterminée et comportant une rampe coopérant avec une contre-rampe tournée du côté du couvercle fixe ou du second plateau de pression, de façon à ajuster la distance entre le premier diaphragme et le couvercle fixe, ou respectivement entre le second diaphragme et le second plateau de pression et compenser l'usure correspondante en fonction de la position de la rampe par rapport à la contre-rampe,
des moyens de détection de l'usure aptes à autoriser le déplacement dudit organe de rattrapage mobile en cas d'usure et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté du couvercle fixe ou du second plateau de pression,
au moins un organe presseur venant contraindre au moins la rampe de l'organe de détection contre la contre-rampe associée, l'organe presseur étant apte à coopérer avec une butée fixe de manière à libérer l'organe de détection lorsqu'une usure est détectée,
l'organe de rattrapage mobile étant sollicité de façon à se déplacer lorsque ledit organe de rattrapage mobile est libéré par le premier diaphragme ou par le second diaphragme,
l'organe de détection mobile étant sollicité de façon à se déplacer et à rattraper, au moins en partie, le jeu entre celui-ci et l'organe presseur, lorsque ledit organe de détection mobile est libéré par l'organe presseur et par le premier diaphragme ou second diaphragme,
un organe de butée étant relié à l'un au moins des organes presseurs, l'organe de butée étant conçu pour écarter l'organe presseur de l'organe de détection et/ou de l'organe de rattrapage en cas d'usure, l'organe de butée étant relié à l'organe presseur dans une zone située entre l'organe de détection et de l'organe de rattrapage, de préférence à mi-distance entre l'organe de détection et de l'organe de rattrapage.

Chaque embrayage est ainsi équipé de moyens de rattrapage d'usure présentant un encombrant axial et radial réduit. L'encombrement du double embrayage est donc réduit de manière sensible.

Par ailleurs, le positionnement des premiers et seconds moyens de détection et de rattrapage d'usure, en particulier entre des éléments présentant des déformées peu importantes, permet de mieux contrôler le positionnement des moyens de détection d'usure et des moyens de rattrapage d'usure correspondants. Ceci permet de garantir le bon fonctionnement desdits moyens de détection et de rattrapage d'usure.

Le premier diaphragme ou le second diaphragme peut libérer l'organe de détection mobile et empêcher le déplacement de l'organe de rattrapage mobile, en position totalement embrayée, le premier diaphragme ou second diaphragme pouvant libérer l'organe de rattrapage mobile et empêcher le déplacement de l'organe de détection mobile, en position totalement débrayée, le premier diaphragme ou le second diaphragme venant toujours en appui sur l'un au moins desdits organes mobiles entre ses positions totalement embrayée et totalement débrayée.

Chaque organe de détection mobile peut se présenter sous la forme d'un anneau comportant une extrémité apte à servir à l'appui du diaphragme correspondant et une extrémité comprenant au moins une rampe s'étendant circonférentiellement, coopérant avec la contre-rampe associée du côté du couvercle fixe ou du second plateau de pression.

Le déplacement de la rampe de l'organe de détection mobile par rapport à la contre-rampe associée peut ainsi être obtenu par pivotement de l'organe de détection mobile.

En outre, chaque organe de rattrapage mobile peut se présenter sous la forme d'un anneau comportant une extrémité apte à servir à l'appui du diaphragme correspondant et une extrémité comportant au moins une rampe s'étendant circonférentiellement, coopérant avec la contre-rampe associée tournée du côté du couvercle fixe ou du second plateau de pression.

Le déplacement de la rampe de l'organe de rattrapage mobile par rapport à la contre-rampe associée peut ainsi être obtenu par pivotement de l'organe de rattrapage mobile.

L'organe de butée peut comporter une extrémité reliée au couvercle fixe ou au couvercle mobile, et une extrémité reliée à l'organe presseur.

Selon une forme de réalisation, l'organe de butée peut comporter une extrémité apte à venir en appui sur le couvercle mobile ou sur le couvercle fixe en cas d'usure, et une extrémité fixée ou venant en appui sur l'organe presseur.

Selon une autre forme de réalisation, l'organe de butée peut comporter une extrémité fixée au couvercle mobile ou au couvercle fixe en cas d'usure, et une extrémité venant en appui sur l'organe presseur.

Le double embrayage ou le dispositif d'embrayage selon l'invention peut également comporter l'une ou plusieurs des caractéristiques suivantes :
- le premier plateau de pression est rappelé vers sa position débrayée, à l'opposé du plateau de réaction, par des premiers moyens de rappel élastique, tels par exemple que des premières languettes élastiques de rappel montées entre le premier plateau de pression et le plateau de réaction,
- le second plateau de pression est rappelé vers sa position débrayée, à l'opposé du plateau de réaction, par des seconds moyens de rappel élastique, tels par exemple que des secondes languettes élastiques de rappel montées entre le second plateau de pression et le plateau de réaction,
- lesdites languettes élastiques assurent le couplage en rotation du plateau de réaction avec les plateaux de pression,
- le premier embrayage est du type normalement ouvert,
- le second embrayage est du type normalement ouvert,
- le double embrayage comporte un seul plateau de réaction servant à l'appui du premier disque de friction et du second disque de friction,
- le premier diaphragme se présente sous la forme d'une tôle annulaire élastique et est monté basculant autour de zones d'appui du couvercle mobile,
- le second diaphragme se présente sous la forme d'une tôle annulaire élastique dont la périphérie radialement externe est montée basculante par rapport au couvercle fixe,
- un organe élastique maintient la périphérie radialement externe du second diaphragme en appui sur le couvercle fixe,
- le couvercle fixe comporte des brides radiales servant à la fixation sur le plateau de réaction, raccordées à une partie annulaire entourant, au moins en partie, le second plateau de pression, le second disque de friction et/ou le second diaphragme, ladite partie annulaire du couvercle fixe étant prolongée par une partie annulaire s'étendant radialement vers l'intérieur,
- la contre-rampe est ménagée sur la partie radiale du couvercle fixe
- le couvercle mobile comporte une partie radialement externe s'étendant depuis le premier plateau de pression et entourant en partie le couvercle fixe, prolongée par une partie s'étendant radialement vers l'intérieur et servant à l'appui du premier diaphragme,
- l'angle des rampes desdits organes mobiles et de la contre-rampe associée est compris entre 2 et 20°.
- l'organe de détection est situé radialement à l'extérieur de l'organe de rattrapage d'usure correspondant,
- un premier organe élastique, tel par exemple qu'un ressort de traction s'étendant circonférentiellement, est monté entre l'organe de détection, d'une part et le couvercle fixe ou le second plateau de pression, d'autre part
- un second organe élastique, tel par exemple qu'un ressort en forme d'épingle, est monté entre chaque organe de détection et l'organe de rattrapage correspondant,
- le premier organe élastique exerce un effort tangentiel ou circonférentiel supérieur à l'effort tangentiel ou circonférentiel exercé par le second organe élastique,
- la longueur du premier organe élastique est importante, de façon à pouvoir solliciter le déplacement de l'organe de détection sur une grande plage angulaire, par exemple de l'ordre de 120°,
- chaque organe presseur se présente sous la forme d'une languette élastique exerçant un effort axial,
- l'organe presseur est fixé au couvercle fixe à une première extrémité, et est apte à venir en appui, à une seconde extrémité, sur l'organe de détection et sur l'organe de rattrapage d'usure correspondants, par exemple sur les premiers organes de détection et de rattrapage mobiles, de façon à contraindre les rampes en appui sur la contre-rampe,
- l'organe presseur est fixé au plateau de pression à une première extrémité, et est apte à venir en appui, à une seconde extrémité, sur l'organe de détection et sur l'organe de rattrapage d'usure correspondants, par exemple sur les seconds organes de détection et de rattrapage mobiles, de façon à contraindre les rampes en appui sur la contre-rampe,
- l'organe presseur peut interagir avec le couvercle fixe ou le couvercle mobile par l'intermédiaire d'une pièce additionnelle.
- un organe de butée est fixé sur la seconde extrémité de ladite languette élastique,
- l'organe de butée comporte une première extrémité fixée, par exemple par rivetage, radialement entre l'organe de détection et l'organe de rattrapage d'usure correspondant, de préférence radialement à mi-distance entre lesdits organes mobiles, et une seconde extrémité cylindrique formant une tête élargie de plus grande dimension que le reste de l'organe de butée et définissant un épaulement,
- la tête élargie de l'organe de butée est apte à venir en appui sur une surface radiale du couvercle mobile ou du couvercle fixe,
- la tête élargie de l'organe de butée est destinée à venir en appui sur la surface radiale correspondante lorsque le déplacement du plateau de pression correspondant est important, c'est-à-dire lorsqu'il existe une usure importante des garnitures du disque de friction et/ou des contre-matériaux du plateau de pression et du plateau de réaction associés.
- l'organe de détection et l'organe de rattrapage comportent au moins une zone dans laquelle ils sont écartés radialement l'un de l'autre,
- l'organe de détection et l'organe de rattrapage ont, en vue de face, une forme générale circulaire avec au moins une zone pourvue de renflements dans laquelle lesdits organes sont localement écartés l'un de l'autre dans la direction radiale, l'organe presseur venant appuyer sur les extrémités correspondantes des organes mobiles au niveau de ladite zone,
- au moins un organe de butée peut traverser axialement le premier diaphragme ou le second diaphragme,
- au moins un organe de butée peut traverser axialement le premier diaphragme et le couvercle mobile,
- au moins un organe de butée peut traverser axialement le second diaphragme et le couvercle fixe,
- l'organe de butée peut présenter un degré de liberté par rapport au couvercle mobile ou par rapport au couvercle fixe, suivant l'axe du double embrayage,
- l'organe de rattrapage mobile et l'organe de détection des premiers moyens de détection et de rattrapage d'usure peuvent être situés radialement à l'extérieur ou radialement à l'intérieur de l'organe de rattrapage mobile et de l'organe de détection des seconds moyens de détection et de rattrapage d'usure, de façon à réduire l'encombrement axial. L'organe de rattrapage mobile et l'organe de détection des premiers moyens de détection et de rattrapage d'usure.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective avec écorché partiel, d'un double embrayage selon une forme de réalisation de l'invention,
- les figures 2 et 3 sont des vues éclatées, en perspective, du double embrayage,
- la figure 4 est une vue en coupe axiale du dispositif d'embrayage,
- la figure 5 est une vue de face de l'organe de détection et de l'organe de rattrapage équipant le premier embrayage ou équipant le second embrayage,
- les figures 6 et 7 sont des vues schématiques illustrant le fonctionnement du premier embrayage, en l'absence d'usure,
- les figures 8 à 11 sont des vues schématiques illustrant le fonctionnement du premier embrayage, en cas d'usure,
- les figures 12 et 13 sont des vues schématiques illustrant le fonctionnement du second embrayage, en l'absence d'usure,
- les figures 14 à 17 sont des vues schématiques illustrant le fonctionnement du second embrayage, en cas d'usure,
- la figure 18 est une vue schématique illustrant les moyens de détection et de rattrapage d'usure du premier embrayage, selon une autre forme de réalisation de l'invention,
- la figure 19 est une vue schématique illustrant les moyens de détection et de rattrapage d'usure du second embrayage, selon une autre forme de réalisation de l'invention,
- la figure 20 est une vue schématique illustrant les moyens de détection et de rattrapage d'usure du premier embrayage, selon encore une autre forme de réalisation de l'invention,
- la figure 21 est une vue schématique illustrant les moyens de détection et de rattrapage d'usure du second embrayage, selon encore une autre forme de réalisation de l'invention.

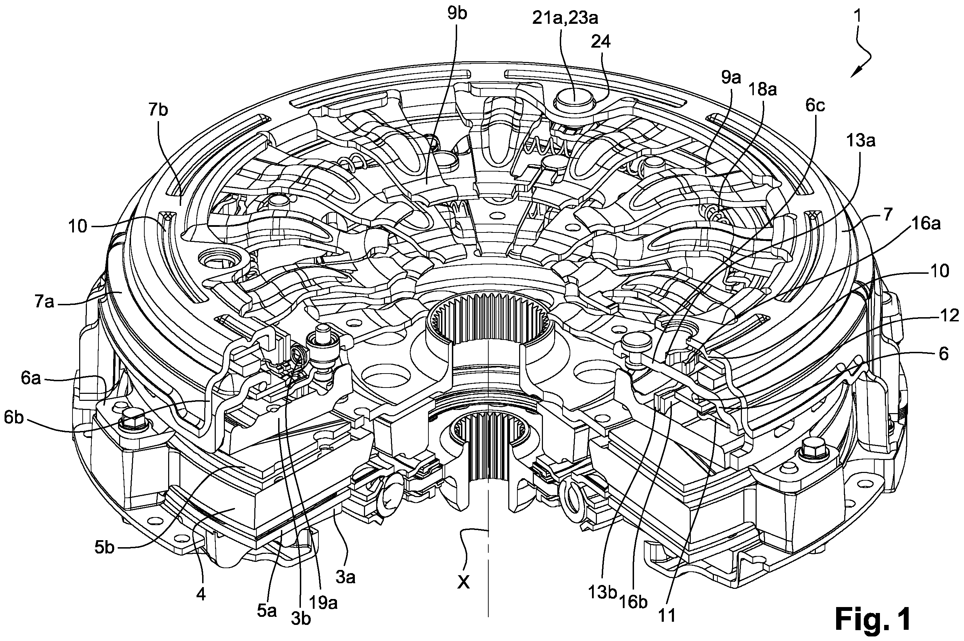

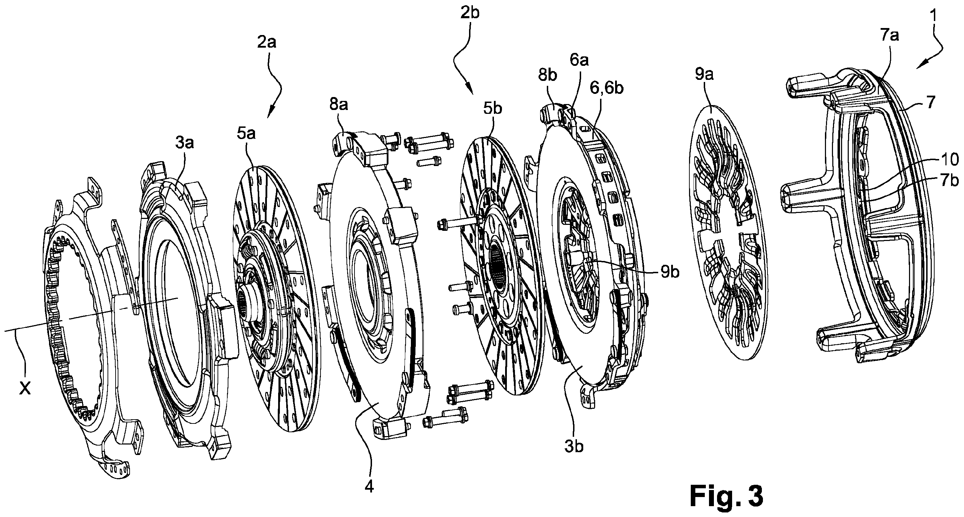

Un double embrayage 1 à rattrapage d'usure selon une forme de réalisation de l'invention est représenté aux figures 1 à 4. Celui-ci est destiné à coupler un moteur avec un premier et un second arbre d'entrée d'une boîte de vitesses (non représentés). L'axe du double embrayage est référencé X. Le double embrayage 1 comporte des premier et second embrayages 2a, 2b (également appelés mécanismes d'embrayage) de passage de rapports de parités différentes.

Le premier embrayage 2a comporte un premier plateau de pression 3a et un plateau de réaction 4 entre lesquels s'étend un premier disque de friction 5a. Le premier plateau de pression 3a est couplé en rotation au plateau de réaction 4 et est mobile en translation par rapport à celui-ci, entre une position embrayée et une position débrayée, dans lesquelles il serre le premier disque de friction 5a sur le plateau de réaction 4, ou respectivement libère le premier disque de friction 5a.

Le plateau de réaction 4 est fixé sur un couvercle 6 appelé couvercle fixe, lui-même destiné à être couplé à l'arbre du moteur. Le premier disque de friction 5a est destiné à être couplé au premier arbre d'entrée de la boîte de vitesses. Ainsi, en position embrayée du premier embrayage 2a, l'arbre du moteur est couplé au premier arbre d'entrée de la boîte de vitesses.

Le premier plateau de pression 3a est fixé sur un couvercle 7 mobile en translation par rapport au plateau de réaction 4 et au couvercle fixe 6, et s'étendant vers l'avant. Des premières languettes élastiques de rappel 8a sont montées entre le premier plateau de pression 3a et le plateau de réaction 4.

Le premier embrayage 2a comporte de plus un premier diaphragme 9a se présentant sous la forme d'une tôle annulaire élastique, et est monté basculant autour de zones d'appui 10 du couvercle mobile 7.

La commande du premier embrayage 2a se fait classiquement au moyen d'une première butée d'embrayage (non représentée) coopérant avec la périphérie radialement interne du premier diaphragme 9a. Le premier diaphragme 9a forme un levier transmettant la force appliquée par la première butée de commande au premier plateau de pression 3a, par l'intermédiaire du couvercle mobile 7.

Afin de permettre le serrage efficace du premier disque de friction 3a, le premier diaphragme 9a est pré-chargé au repos. Sans cette pré-charge, le premier diaphragme 9a serait, au repos, dans un état d'élasticité requérant un début de course de la première butée de commande relativement important pour appliquer un effort de serrage efficace sur le premier disque de friction 3a. Lorsque la première butée d'embrayage est actionnée, elle équilibre la pré-charge du premier diaphragme 9a avant de commencer le serrage du premier disque de friction 3a. La pré-charge du premier diaphragme 9a permet de réduire la course d'approche de la première butée d'embrayage afin de serrer le premier disque de friction 3a, et d'avoir toujours un effort de pré-charge minimum, par exemple sur le roulement à billes de la premier butée d'embrayage et sur le roulement à billes qui supporte le double embrayage 1. On augmente ainsi la durée de vie desdits roulements et on limite les vibrations du double embrayage 1.

Le premier embrayage 2a est du type normalement ouvert. La position de repos du premier diaphragme 9a correspond donc à un état débrayé du premier d'embrayage 2a. Le premier diaphragme 9a présente de préférence une portion du type rondelle de Belleville permettant de rappeler le premier diaphragme 9a vers sa position de repos.

En position de repos du premier diaphragme 9a, c'est-à-dire lorsque la première butée n'exerce pas ou peu d'effort sur le premier diaphragme 9a, le premier diaphragme 9a n'exerce donc pas (ou peu) d'effort sur le premier plateau de pression 3a. Le premier plateau de pression 3a est écarté du plateau de réaction 4 par l'intermédiaire des languettes élastiques 8a, de manière à libérer le premier disque de friction 5a.

Le second embrayage 2b comporte un second plateau de pression 3b, et un second disque de friction 5b s'étendant radialement entre le plateau de réaction 4 et le second plateau de pression 3b. Le même plateau de réaction 4 est ainsi utilisé pour les deux embrayages 2a, 2b, chaque disque de friction 5a, 5b étant disposé du côté de l'une des deux faces radiales d'appui du plateau de réaction 4. Des secondes languettes élastiques de rappel 8b sont montées entre le second plateau de pression 3b et le plateau de réaction 4.

Le second plateau de pression 3b est couplé en rotation au plateau de réaction 4 et est mobile en translation par rapport à celui-ci, entre une position embrayée et une position débrayée, dans lesquelles il serre le second disque de friction 5b sur le plateau de réaction 4, ou respectivement libère le second disque de friction 5b.

Le second disque de friction 5b est couplé au second arbre d'entrée de la boîte de vitesses. Ainsi, en position embrayée du second embrayage 2b, l'arbre du moteur est couplé au second arbre d'entrée de la boîte de vitesses.

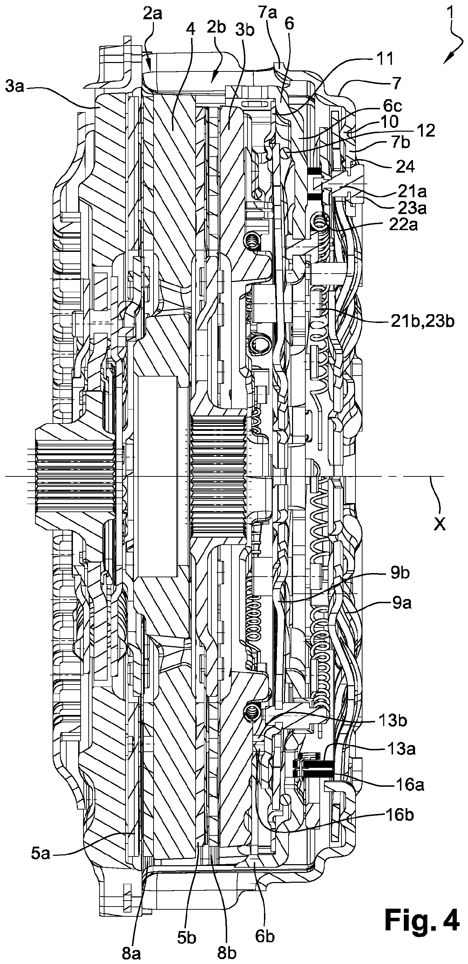

Le second embrayage 2b comporte en outre un second diaphragme 9b se présentant sous la forme d'une tôle annulaire élastique dont la périphérie radialement externe est montée basculante par rapport au couvercle fixe. Un organe élastique 11 maintient la périphérie radialement externe du second diaphragme en appui 12 sur le couvercle fixe 6 (figure 4).

La commande du second embrayage 2b se fait classiquement au moyen d'une seconde butée d'embrayage (non représentée) coopérant avec la périphérie radialement interne du second diaphragme 9b, par l'intermédiaire d'un organe de transmission d'effort (non représenté). Le second diaphragme 9b forme un levier transmettant la force appliquée par la seconde butée d'embrayage au second plateau de pression 3b, afin de permettre le serrage efficace du second disque de friction 5b.

Le second embrayage 2b est également du type normalement ouvert. En position de repos du second diaphragme 9b, c'est-à-dire lorsque la seconde butée de commande n'exerce pas ou peu d'effort sur le second diaphragme 9b, le second diaphragme 9b n'exerce pas (ou peu) d'effort sur le second plateau de pression 3b. Le second plateau de pression 3b est écarté du plateau de réaction 4 par l'intermédiaire des languettes élastiques 8b, de manière à libérer le second disque de friction 3b.

Le couvercle fixe 6 comporte, de l'arrière vers l'avant, des brides radiales 6a servant à la fixation sur le plateau de réaction 4, raccordées à une partie annulaire 6b entourant, au moins en partie, le second plateau de pression 3b, le second disque de friction 5b et/ou le second diaphragme 9b. Ladite partie annulaire 6b est prolongée par une partie annulaire 6c s'étendant radialement vers l'intérieur.

Par ailleurs, le couvercle mobile 7 comporte une partie radialement externe 7a s'étendant vers l'avant depuis le premier plateau de pression 3a et entourant en partie le couvercle fixe 6, prolongée à l'avant par une partie 7b s'étendant radialement vers l'intérieur et servant à l'appui 10 du premier diaphragme 9a.

Afin de compenser l'usure du premier disque de friction 5a, du premier plateau de pression 3a et/ou du plateau de réaction 4, le premier embrayage 2a est équipé de premiers moyens de détection et de rattrapage d'usure.

Les premiers moyens de rattrapage et de détection d'usure équipant le premier embrayage 2a sont intercalés axialement entre le couvercle fixe 6 et le premier diaphragme 9a, plus précisément intercalés axialement entre la partie radiale 6c du couvercle fixe 6 et le premier diaphragme 9a.

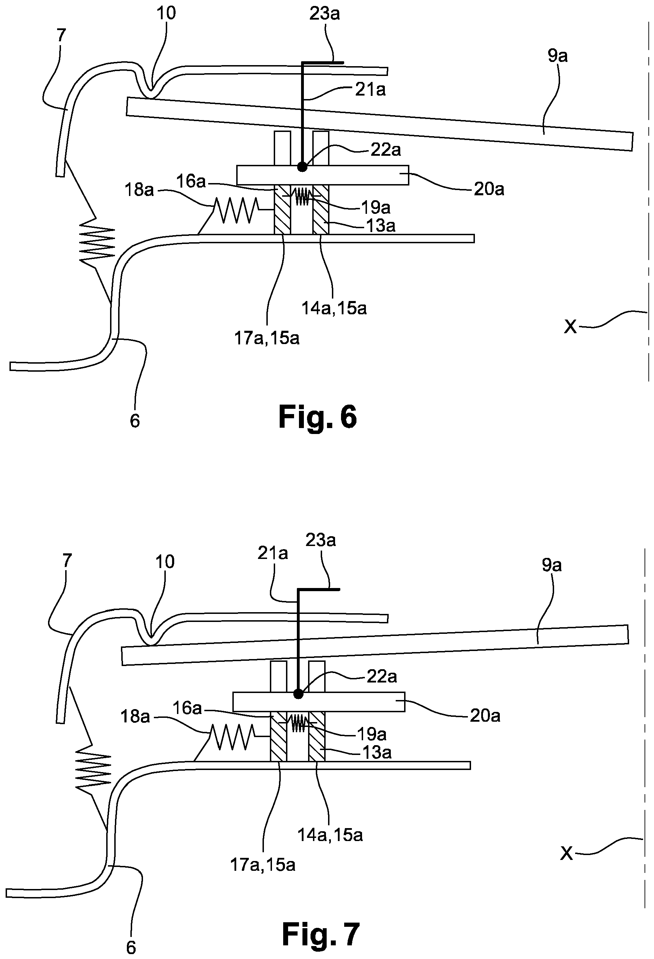

Les premiers moyens de rattrapage et de détection d'usure comportent un premier organe de rattrapage mobile 13a se présentant sous la forme d'un anneau comportant une extrémité contre laquelle le premier diaphragme 9a est apte à venir en appui, et une extrémité comportant au moins une rampe 14a s'étendant circonférentiellement, coopérant avec une contre-rampe 15a associée ménagée directement sur la partie radiale 6c du couvercle fixe 6 (voir figure 6 par exemple). Bien entendu, la contre-rampe 15a peut être formée par une pièce indépendante et fixée sur le couvercle fixe 6.

Les premiers moyens de rattrapage et de détection d'usure comportent également un premier organe de détection mobile 16a se présentant sous la forme d'un anneau ayant une extrémité contre laquelle le premier diaphragme 9a est apte à venir en appui, et une extrémité comportant au moins une rampe 17a s'étendant circonférentiellement, coopérant avec la contre-rampe 15a de la partie radiale 6c du couvercle fixe 6 (voir figure 6 par exemple).

A titre d'exemple, l'angle des rampes 14a, 17a desdits organes mobiles 13a, 16a et de la contre-rampe 15a du couvercle fixe 6 est compris entre 2 et 20°

Les deux organes mobiles 13a, 16a sont concentriques et séparés l'un de l'autre, le premier organe de détection 16a étant situé radialement à l'extérieur du premier organe de rattrapage d'usure 13a. En variante, les positions respectives desdits organes mobiles 13a, 16a peuvent être inversées. On notera toutefois que la possibilité d'inversion des organes mobiles 13a, 16a est liée à l'architecture interne du mécanisme.

Des moyens de centrage, tels par exemple que de plots, assurent le bon positionnement des organes mobiles 13a, 16a.

Un premier organe élastique 18a, tel par exemple qu'un ressort de traction s'étendant circonférentiellement, est monté entre le premier organe de détection 16a et le couvercle fixe 6.

Un second organe élastique 19a, tel par exemple qu'un ressort en forme d'épingle, est monté entre le premier organe de détection 16a et le premier organe de rattrapage 13a.

La longueur du premier ressort 18a est importante, de façon à pouvoir solliciter le déplacement du premier organe de détection 16a sur une grande plage angulaire (par exemple de l'ordre de 120°).

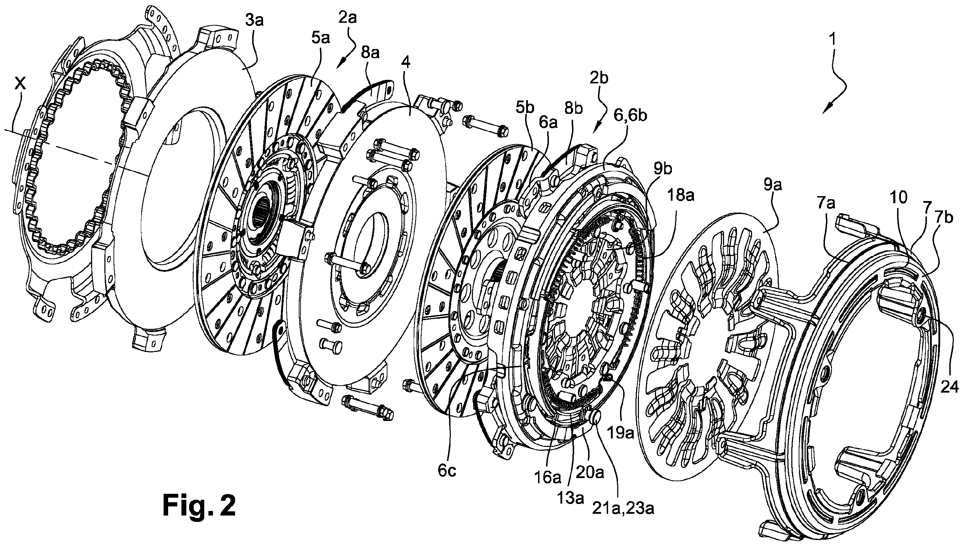

Le premier embrayage 2a comporte également au moins un premier organe presseur 20a (figure 2) se présentant sous la forme d'une languette élastique exerçant un effort axial. Ladite languette 20a est fixée au couvercle fixe 6, à une première extrémité, et est apte à venir en appui, à une seconde extrémité, sur le premier organe de détection 16a et éventuellement sur le premier organe de rattrapage d'usure 13a, de façon à les contraindre en appui sur la partie radiale 6c du couvercle fixe 6.

Par exemple, dans le cas où la languette 20a vient en appui simultanément sur le premier organe de détection 16a et sur le premier organe de rattrapage d'usure 13a, l'organe presseur 20a exerce un effort presseur réparti entre l'organe de détection 16a et l'organe de rattrapage 13a. La composante axiale de cet effort suivant l'axe X est appliquée sur un rayon d'application situé entre l'organe de détection 16a et l'organe de rattrapage 13a.

Un organe de butée 21a est fixé sur la seconde extrémité de ladite languette 20a. L'organe de butée 21a présente la forme générale d'un plot. Le plot de butée 21a comporte en particulier une première extrémité 22a (figure 4) fixée, par exemple par rivetage, radialement entre le premier organe de détection 16a et le premier organe de rattrapage d'usure 13a, de préférence radialement à mi-distance entre lesdits organes mobiles 13a, 16a, et une seconde extrémité cylindrique 23a formant une tête élargie de plus grande dimension que le reste du plot 21a et définissant un épaulement. L'organe de butée 21a traverse un trou du couvercle mobile 7 et est apte à venir en appui sur une surface de fond radiale formée par un lamage 24 ménagé dans le couvercle mobile 7.

En particulier, la tête élargie 23a de l'organe de butée 21a est destinée à venir en appui sur la surface de fond du lamage 24 lorsque le déplacement du premier plateau de pression 3a est important, c'est-à-dire lorsqu'il existe une usure importante des garnitures du premier disque de friction 5a et/ou des contre-matériaux du premier plateau de pression 3a et du plateau de réaction 4.

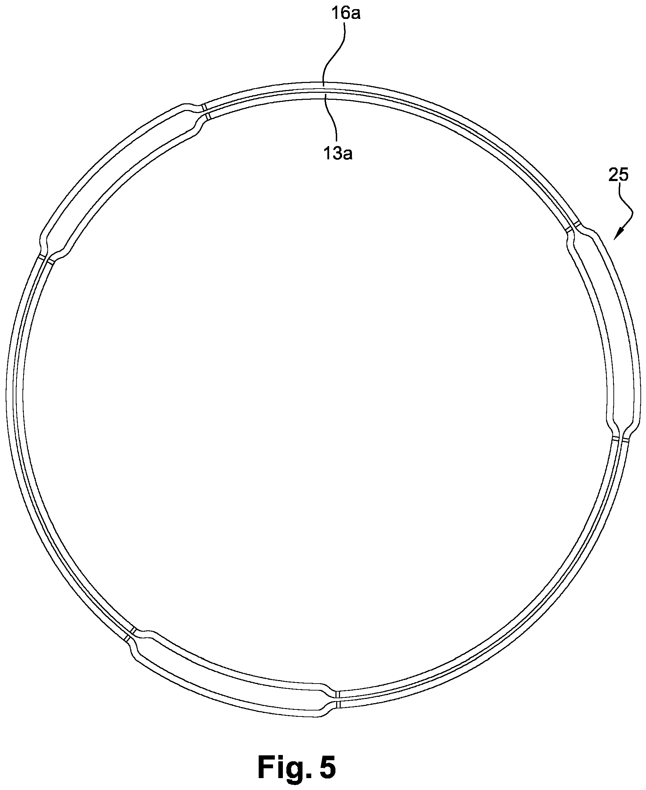

Afin de permettre la fixation de la première extrémité 22a de l'organe de butée 21a sur la languette 20a radialement entre les organes mobiles 13a, 16a, ceux-ci peuvent comporter au moins une zone 25 dans laquelle ils sont écartés l'un de l'autre, comme illustré à la figure 5. Les organes mobiles 13a, 16a ont ainsi, en vue de face, une forme générale circulaire avec au moins une zone 25 pourvue de renflements dans laquelle les organes mobiles 13a, 16a sont localement écartés l'un de l'autre dans la direction radiale, la seconde extrémité de la languette 20a venant appuyer sur les extrémités secondaires correspondantes des organes mobiles 13a, 16a au niveau de l'une des zones 25. On notera que, sur la figure 5, trois zones 25 sont représentées, le premier embrayage pouvant alors comporter trois languettes 20a, équipées chacune d'un organe de butée 21a de structure telle que décrite précédemment. Les trois zones 25 sont régulièrement réparties sur toute la circonférence et sont donc décalées angulairement de 120°.

Le fonctionnement des premiers moyens de détection et rattrapage d'usure va maintenant être décrit en référence aux figures 6 à 11.

Comme cela est illustré schématiquement aux figures 6 et 7, les premiers moyens de rattrapage et de détection d'usure sont inopérants lorsque les garnitures du premier disque de friction 5a ne sont pas ou peu usées et que les contre-matériaux du premier plateau de pression 3a et du plateau de réaction 4 associé ne sont pas usés, par exemple lorsque l'usure axiale cumulée est inférieure à 0,05 mm.

Comme illustré à la figure 6, en position totalement embrayée et en l'absence d'usure, le premier diaphragme 9a vient en appui sur le premier organe de rattrapage 13a, de façon à repousser le premier plateau de pression 3a à l'encontre des languettes élastiques de rappel 8a. Le premier plateau de pression 3a et le plateau de réaction correspondant 4 (axialement fixe) enserrent alors le premier disque de friction 5a portant les garnitures. Dans cette position, la tête 23a de l'organe de butée 21a affleure la surface de fond du lamage 24 du couvercle mobile 7.

En outre, comme illustré à la figure 7, en position totalement débrayée et en l'absence d'usure, le premier diaphragme 9a vient en appui sur le premier organe de détection 16a, un jeu étant créé entre le premier diaphragme 9a et l'extrémité correspondante du premier organe de rattrapage 13a.

On constate ainsi que, en l'absence d'usure prononcée, la seconde extrémité de la languette élastique 20a et/ou le premier diaphragme 9a maintient le premier organe de détection 16a et le premier organe de rattrapage 13a en appui sur le couvercle fixe 6, quelle que soit la phase de fonctionnement du premier embrayage 2a (embrayage/débrayage). Dans ce cas, le couple résistant généré par le frottement entre lesdits organes 13a, 16a et le couvercle fixe 6 est supérieur au couple exercé par les ressorts 18a, 19a. Lesdits organes 13a, 16a sont donc immobilisés en rotation par rapport au couvercle fixe 6, quelle que soit la phase de fonctionnement du premier embrayage 2a.

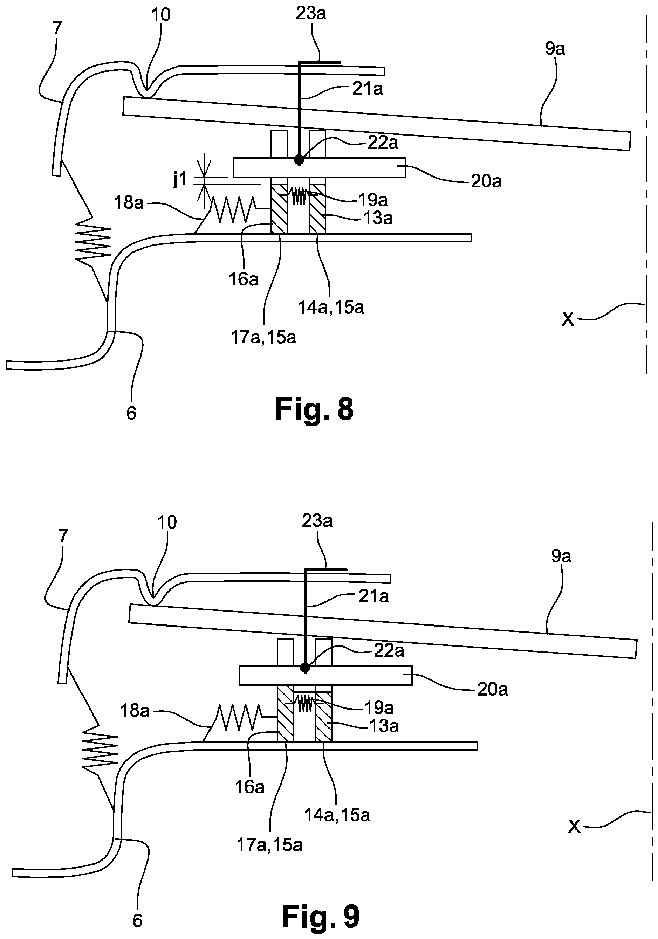

Les figures 8 à 11 illustrent le cas où les garnitures du premier disque de friction 5a (ou encore les contre-matériaux du premier plateau de pression 3a et du plateau de réaction 4) présentent une usure importante, qu'il est nécessaire de rattraper afin d'éviter un disfonctionnement du premier embrayage 2a.

Dans ce cas, comme illustré à la figure 8, la tête 23a de l'organe de butée 21a vient en appui sur la surface de fond du lamage 24 du couvercle mobile 7, en position totalement embrayée, de sorte que la seconde extrémité de la languette élastique 20a se décolle de l'extrémité secondaire correspondante du premier organe de détection 16a. Un jeu j1 se forme donc entre ladite extrémité secondaire du premier organe de détection 16a et la seconde extrémité de la languette 20a.

C'est ainsi notamment qu'il peut exister un jeu axial entre le premier organe presseur 20a et l'extrémité secondaire correspondante du premier organe de rattrapage d'usure 13a, alors même que le premier organe presseur 20a est en appui sur l'extrémité secondaire correspondante du premier organe de détection 16b.

Il est possible dans certains cas que l'extrémité du premier organe de détection 16a et l'extrémité secondaire du premier organe de détection 16a soient confondues. De même, il est possible que l'extrémité du premier organe de rattrapage 13a et l'extrémité secondaire du premier organe de rattrapage 13a soient confondues.

Le premier organe de détection 16a, qui n'est alors plus soumis à un effort axial, est entraîné en rotation par le premier organe élastique 18a, de façon à combler au moins partiellement le jeu j1 (figure 9). Lors de cette rotation, le second organe élastique 19a est contraint.

La rotation du premier organe de détection 16a est par exemple stoppée lorsque l'extrémité secondaire correspondante du premier organe de détection 16a vient à nouveau en appui sur la seconde extrémité de la languette 20a. On notera que, durant cette phase, le premier organe de rattrapage 13a est maintenu en appui sur le couvercle fixe 6 par le premier diaphragme 9a. Il est donc immobilisé en rotation par rapport au couvercle fixe 6.

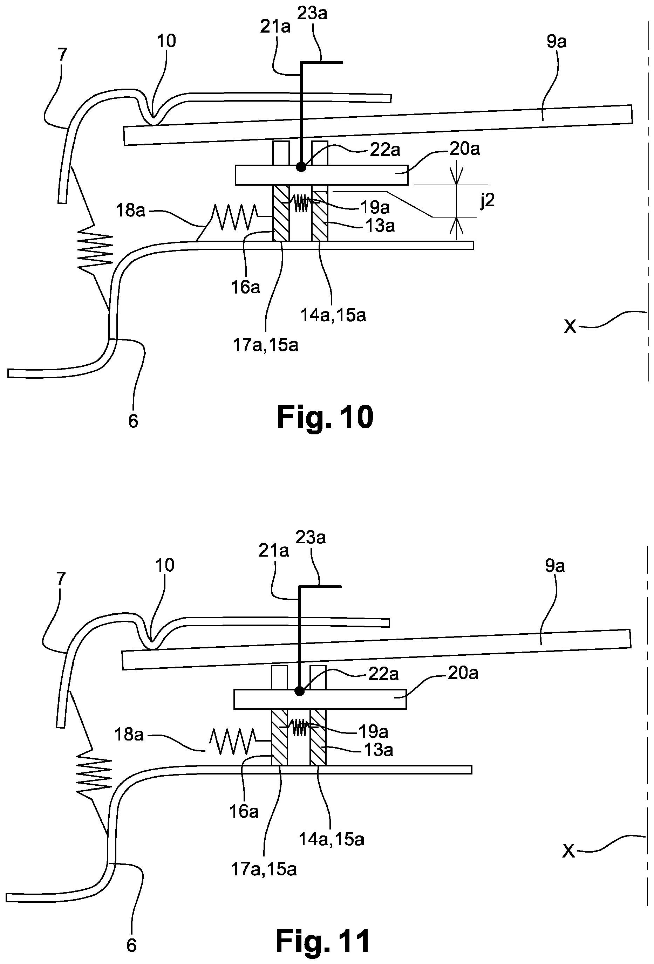

Lors de la phase de débrayage suivante, le premier diaphragme 9a transfère son appui du premier organe de rattrapage 13a vers le premier organe de détection 16a. Les figures 10 et 11 sont des vues illustrant les positions de ces éléments lors d'un tel transfert. Lors d'un tel débrayage, le premier plateau de pression 3a est écarté du plateau de réaction 4 par l'intermédiaire des languettes de rappel correspondantes 8a, de manière à libérer le premier disque de friction 5a.

Comme illustré à la figure 10, lorsque le premier diaphragme 9a est en position totalement débrayée, il libère totalement le premier organe de rattrapage 13a. Dans cette position, le premier organe de détection 16a est maintenu fixe en rotation par appui sur le premier diaphragme 9a et sur le couvercle fixe 6. Par ailleurs, la tête 23a de l'organe de butée 21a est écartée de la surface de fond du lamage 24 du couvercle mobile 7 et la seconde extrémité de la languette mobile 20a est écartée d'un jeu j2 par rapport secondaire à l'extrémité correspondante du premier organe de rattrapage 13a.

Le premier organe de rattrapage 13a, contraint par le second organe élastique 19a, est donc entraîné en rotation comme illustré à la figure 11, de manière à combler tout ou partie du jeu j2 entre ledit premier organe de rattrapage 13a et la languette 20a.

Le pivotement du premier organe de rattrapage 13a et du premier organe de détection 16a par rapport au couvercle fixe 6 permet, par l'intermédiaire des rampes 14a, 17a et de la contre-rampe 15a, d'augmenter la distance axiale entre le couvercle fixe 6 et la zone d'appui du premier diaphragme 9a sur lesdits organes 13a, 16a, ce qui permet de compenser progressivement l'usure des garnitures du premier disque de friction 5a et/ou l'usure des contre-matériaux du premier plateau de pression 3a et du plateau de réaction 4.

Une telle structure permet également de conserver l'angle de fonctionnement du premier diaphragme 9a, de manière à maintenir un effort de pré-charge constant et réduire les contraintes mécaniques.

Afin de compenser l'usure du second disque de friction 5b, du second plateau de pression 3b et/ou du plateau de réaction 4, le second embrayage 2b est équipé de seconds moyens de rattrapage et de détection d'usure.

Les seconds moyens de rattrapage et de détection d'usure équipant le second embrayage 2b sont intercalés axialement entre le second diaphragme 9b et le second plateau de pression 3b.

Les seconds moyens de rattrapage et de détection d'usure comportent un second organe de rattrapage mobile 13b se présentant sous la forme d'un anneau comportant une extrémité contre laquelle le second diaphragme 9b est apte à venir en appui, et une extrémité comportant au moins une rampe 14b s'étendant circonférentiellement, coopérant avec une contre-rampe associée 15b ménagée directement sur le second plateau de pression 3b.

Les seconds moyens de rattrapage et de détection d'usure comportent également un second organe de détection mobile 16b se présentant sous la forme d'un anneau comportant une extrémité contre laquelle le second diaphragme 9b est apte à venir en appui, et une extrémité comportant au moins une rampe 17b s'étendant circonférentiellement, coopérant avec la contre-rampe 15b du second plateau de pression 3b.

A titre d'exemple, l'angle des rampes 14b, 17b desdits organes mobiles 13b, 16b et de la contre-rampe 15b du second plateau de pression 3b est compris entre 2 et 20°.

Les deux organes mobiles 13b, 17b sont concentriques et séparés l'un de l'autre par exemple par des plots de centrage et d'écartement. Dans la forme de réalisation représentée aux figures, le second organe de détection mobile 16b est situé radialement à l'extérieur du second organe de rattrapage mobile 13b correspondant. En variante, les positions respectives desdits organes mobiles 13b ,16b peuvent être inversées.

Un premier ressort de traction 18b s'étendant circonférentiellement est monté entre le second organe de détection 16b et le second plateau de pression 3b.

Un second ressort, tel par exemple qu'un ressort en forme d'épingle 19b, est monté entre le second organe de détection 16b et le second organe de rattrapage 13b.

La longueur du premier ressort 18b est importante, de façon à pouvoir solliciter le déplacement du second organe de détection 16b sur une grande plage angulaire (par exemple de l'ordre de 120°).

Le second embrayage 2b comporte également au moins un second organe presseur 20b se présentant sous la forme d'une languette élastique exerçant un effort axial. Ladite languette 20b est fixée au plateau de pression 3b, à une première extrémité, et vient en appui, à une seconde extrémité, sur l'extrémité secondaire correspondante du second organe de détection 16b et éventuellement sur le second organe de rattrapage d'usure 13b, de façon à le contraindre en appui sur le second plateau de pression 3b. C'est ainsi notamment qu'il peut exister un jeu axial entre le second organe presseur 20b et l'extrémité secondaire correspondante du second organe de rattrapage d'usure 13b, alors même que le second organe presseur 20b est en appui sur l'extrémité secondaire correspondante du second organe de détection 16b.

Un organe de butée 21b est fixé sur la seconde extrémité de ladite languette 20b. L'organe de butée 21b présente la forme générale d'un plot. Le plot de butée 21b comporte en particulier une première extrémité 22b fixée, par exemple par rivetage, radialement entre le second organe de détection 16b et le second organe de rattrapage d'usure 13b, de préférence radialement à mi-distance entre lesdits organes mobiles 13b, 16b, et une seconde extrémité 23b cylindrique formant une tête élargie de plus grande dimension que le reste du plot 21b et définissant un épaulement. L'organe de butée 21b traverse un trou du couvercle fixe 6 et est apte à venir en appui sur une surface radiale du couvercle fixe 6.

En particulier, la tête élargie 23b de l'organe de butée 21b est destinée à venir en appui sur la surface radiale correspondante lorsque le déplacement du second plateau de pression 3b est important, c'est-à-dire lorsqu'il existe une usure importante des garnitures du second disque de friction 5b et/ou des contre-matériaux du second plateau de pression 3b et du plateau de réaction 4.

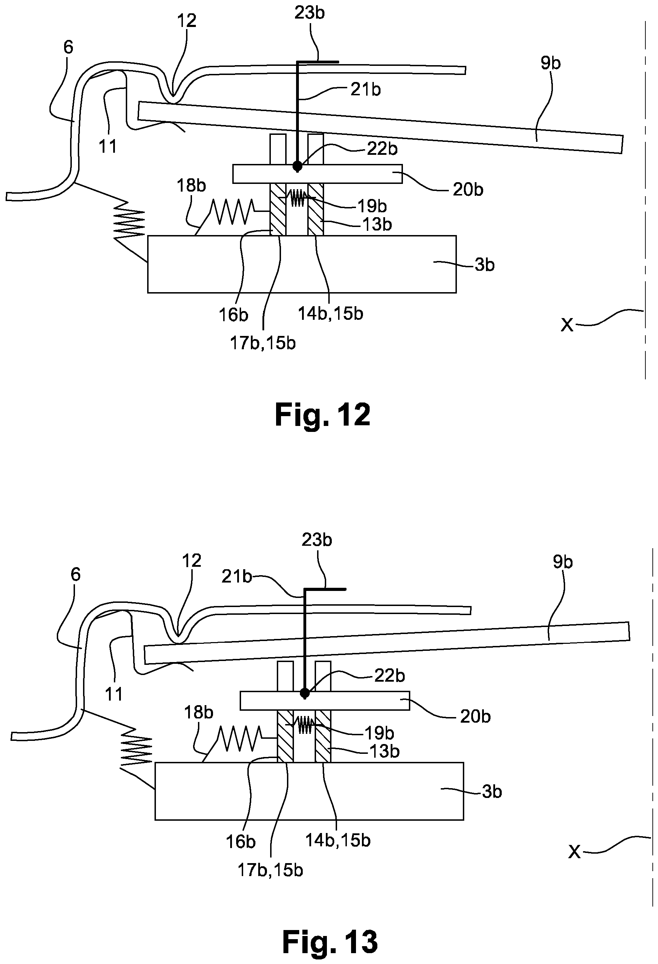

Le fonctionnement des seconds moyens de détection et de rattrapage d'usure va maintenant être décrit en référence aux figures 12 à 17.

Comme cela est illustré schématiquement aux figures 12 et 13, les seconds moyens de rattrapage et de détection d'usure sont inopérants lorsque les garnitures du second disque de friction 5b ne sont pas ou peu usées et que les contre-matériaux du second plateau de pression 3b et du plateau de réaction 4 associés ne sont pas usés, par exemple lorsque l'usure axiale cumulée est inférieure à 0,05 mm.

Comme illustré à la figure 12, en position totalement embrayée et en l'absence d'usure, le second diaphragme 9b vient en appui sur le second organe de rattrapage 13b, de façon à repousser le second plateau de pression 3b à l'encontre des languettes élastiques de rappel 8b. Le second plateau de pression 3b et le plateau de réaction correspondant 4 (axialement fixe) enserrent alors le second disque de friction 5b portant les garnitures. Dans cette position, la tête 23b de l'organe de butée 21b affleure la surface radiale du couvercle fixe 6.

En outre, comme illustré à la figure 13, en position totalement débrayée et en l'absence d'usure, le second diaphragme 9b vient en appui sur le second organe de détection 16b, un jeu étant créé entre le second diaphragme 9b et l'extrémité correspondante du second organe de rattrapage 13b.

On constate ainsi que, en l'absence d'usure prononcée, la seconde extrémité de la languette élastique 20b et/ou le second diaphragme 9b maintient le second organe de détection 16b et le second organe de rattrapage 13b en appui sur le second plateau de pression 3b, quelle que soit la phase de fonctionnement du second embrayage 2b (embrayage/débrayage). Dans ce cas, le couple résistant généré par le frottement entre lesdits organes 13b, 16b et le second plateau de pression 3b est supérieur au couple exercé par les ressorts 18b ,19b. Lesdits organes 13b, 16b sont donc immobilisés en rotation par rapport au second plateau de pression 3b, quelle que soit la phase de fonctionnement du second embrayage 2b.

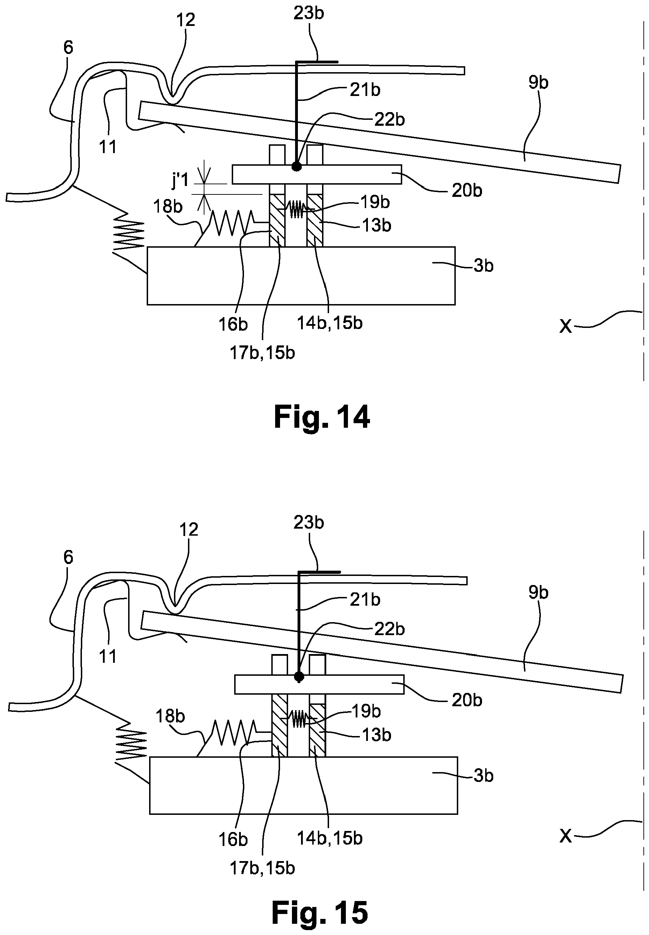

Les figures 14 à 17 illustrent le cas où les garnitures du second disque de friction 5b (ou encore les contre-matériaux du second plateau de pression 3b et du plateau de réaction 4) présentent une usure importante, qu'il est nécessaire de rattraper afin d'éviter un disfonctionnement du second embrayage 2b.

Dans ce cas, comme illustré à la figure 14, la tête 23b de l'organe de butée 21b vient en appui sur la surface radiale du couvercle fixe 6, en position totalement embrayée, de sorte que la seconde extrémité de la languette élastique 20b se décolle de l'extrémité secondaire correspondante du second organe de détection 16b. Un jeu j'1 se forme donc entre ladite extrémité secondaire du second organe de détection 16b et la seconde extrémité de la languette 20b.

Il est possible dans certains cas que l'extrémité du second organe de détection 16b et l'extrémité secondaire du second organe de détection 16b soient confondues. De même, il est possible que l'extrémité du second organe de rattrapage 13b et l'extrémité secondaire du second organe de rattrapage 13a soient confondues.

Le second organe de détection 16b, qui n'est alors plus soumis à un effort axial, est entraîné en rotation par le premier organe élastique 18b, de façon à combler au moins partiellement le jeu j'1 (figure 9). Lors de cette rotation, le second organe élastique 19b est contraint.

La rotation du second organe de détection 16b est par exemple stoppée lorsque l'extrémité secondaire correspondante du second organe de détection 16b vient à nouveau en appui sur la seconde extrémité de la languette 20b. On notera que, durant cette phase, le second organe de rattrapage 13b est maintenu en appui sur le second plateau de pression 3b par le second diaphragme 9b. Il est donc immobilisé en rotation par rapport au second plateau de pression 3b.

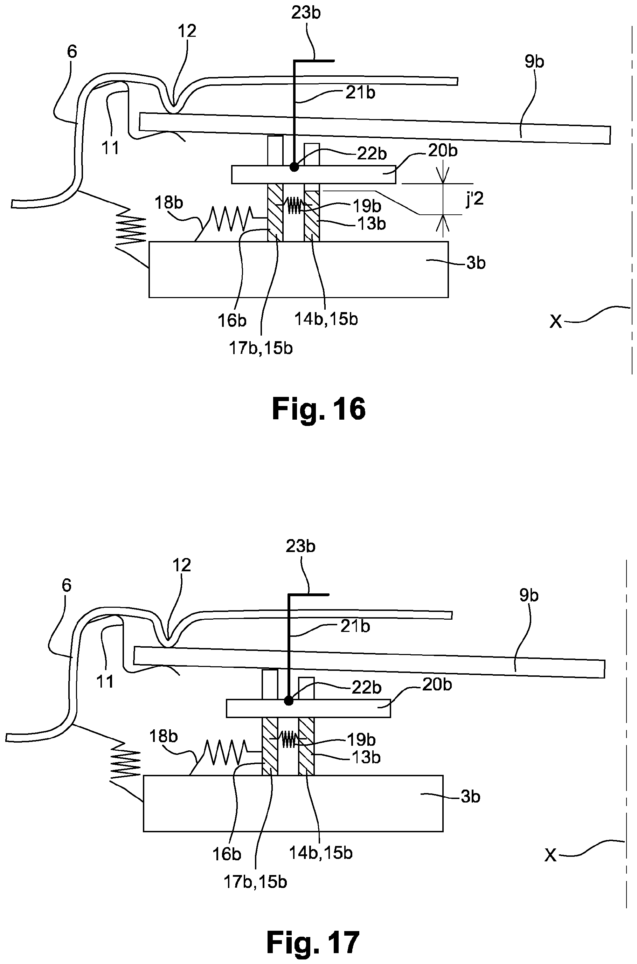

Lors de la phase de débrayage suivante, le second diaphragme 9b transfère son appui du second organe de rattrapage 13b vers le second organe de détection 16a. Les figures 15 et 16 sont des vues illustrant les positions de ces éléments lors d'un tel transfert. Lors d'un tel débrayage, le second plateau de pression 3b est écarté du plateau de réaction 4 par l'intermédiaire des languettes de rappel correspondantes 8b, de manière à libérer le second disque de friction 5b.

Comme illustré à la figure 16, lorsque le second diaphragme 9b est en position totalement débrayée, il libère totalement le second organe de rattrapage 13b. Dans cette position, le second organe de détection 16b est maintenu fixe en rotation par appui sur le second diaphragme 9b et sur le second plateau de pression 3b. Par ailleurs, la tête 23b de l'organe de butée 21b est écartée de la surface radiale du couvercle fixe 6 et la seconde extrémité de la languette mobile 20b est écartée d'un jeu j'2 par rapport à l'extrémité secondaire correspondante du second organe de rattrapage 13b.

Le second organe de rattrapage 13b, contraint par le second organe élastique 19b, est donc entraîné en rotation comme illustré à la figure 17, de manière à combler tout ou partie du jeu j'2 entre ledit second organe de rattrapage 13b et la languette 20b.

Le pivotement du second organe de rattrapage 13b et du second organe de détection 16b par rapport au second plateau de pression 3b permet, par l'intermédiaire des rampes 14b, 17b, et de la contre-rampe 15b, d'augmenter la distance axiale entre le second plateau de pression 3b et la zone d'appui du second diaphragme 9b sur lesdits organes 13b, 16b, ce qui permet de compenser progressivement l'usure des garnitures du second disque de friction 5b et/ou l'usure des contre-matériaux du second plateau de pression 3b et du plateau de réaction 4.

Une telle structure permet également de conserver l'angle de fonctionnement du second diaphragme 9b, de manière à maintenir un effort de pré-charge constant et réduire les contraintes mécaniques.

On notera que, dans chacune des formes de réalisation décrite ci-dessus, les moyens de rappel des plateaux de pression 3a, 3b (formés par les languettes élastiques 8a, 8b) peuvent exercer un effort important, cet effort étant repris par l'organe de rattrapage mobile correspondant 13a, 13b puis par le diaphragme correspondant 9a, 9b, ou par l'organe de détection mobile correspondant 16a, 16b puis par le diaphragme correspondant 9a, 9b, en fonction de la position dudit diaphragme 9a, 9b. En effet, lors de leurs déplacements, lesdits organes mobiles 13a, 13b, 16a, 16b ne sont pas soumis à l'effort exercé par les moyens de rappel 8a, 8b du plateau de pression 3a, 3b et il est donc possible de solliciter aisément leur déplacement à l'aide des ressorts 18a, 18b, 19a, 19b, en cas d'usure.

Le fait de disposer de moyens de rappel 8a, 8b des plateaux de pression 3a, 3b exerçant des efforts importants, tels par exemple que des languettes ressorts 8a, 8b ayant une forte raideur, permet de limiter la transmission des vibrations axiales et d'éviter les phénomènes de pompage.

On notera également que les languettes 20a, 20b formant les organes presseurs sont respectivement fixées au couvercle fixe 6, et au plateau de pression 3b et ne sont donc pas soumises à des phénomènes de fatigue dus aux cycles d'embrayage et de débrayage en fonctionnement.

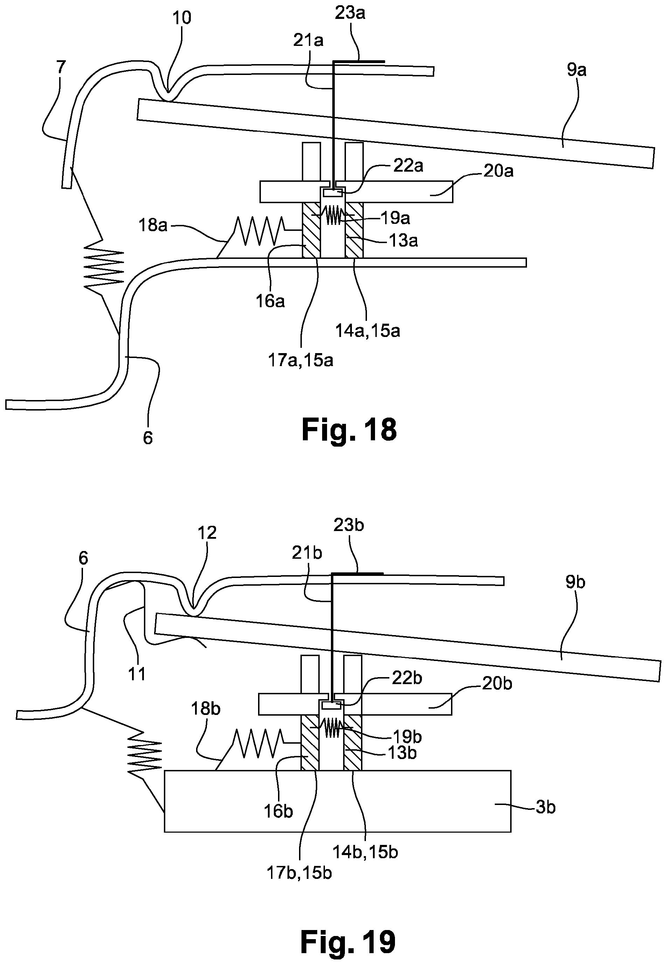

Selon une variante représentée schématiquement aux figures 18 et 19, chaque organe de butée 21a, 21b peut être en appui axial sur la seconde extrémité de la languette élastique correspondante 20a, 20b, une fixation de l'organe de butée 21a, 21b de ladite languette élastique 20a, 20b au niveau de l'extrémité 22a, 22b n'étant pas obligatoire. La butée est dans ce cas orientée de façon à pouvoir décoller la seconde extrémité de la languette 20a, 20b de l'organe de détection correspondant 16a, 16b, à l'aide de l'organe de butée 21a, 21b, en cas d'usure.

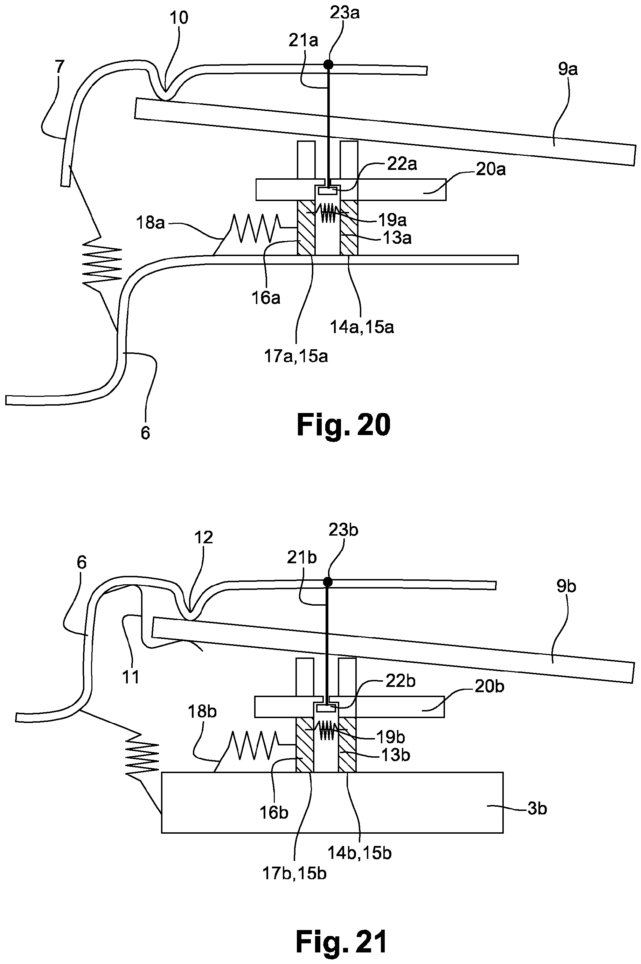

Selon encore une autre variante représentée aux figures 20 et 21, la première extrémité 23a, 23b de chaque organe de butée 21a, 21b est fixe par rapport au couvercle mobile 7 ou par rapport au couvercle fixe 6, respectivement, la seconde extrémité 22a, 22b de chaque organe de butée 21a, 21b étant destinée à venir en appui axial sur la seconde extrémité de la languette élastique correspondante 20a, 20b.

Le positionnement des premiers moyens de détection et de rattrapage d'usure entre le premier diaphragme 9a et le couvercle fixe 6, d'une part, et le positionnement des seconds moyens de détection et de rattrapage d'usure entre le second diaphragme 9b et le second plateau de pression 3b permet de simplifier la structure du double embrayage 1, de réduire l'encombrement radial de ce dernier et de mieux contrôler le fonctionnement desdits moyens de détection et de rattrapage d'usure en les positionnant entre des pièces qui sont soumises à de faibles déformées en fonctionnement. On maîtrise ainsi mieux les positions des organes mobiles 13a, 13b, 16a, 16b.

Par ailleurs, le fait de relier chaque organe de butée 21a, 21b à la seconde extrémité de la languette correspondante 20a, 20b, dans une zone située entre l'organe de détection l'organe de rattrapage, permet de réduire au maximum la déformation de cette seconde extrémité, de façon à contrôler au mieux les positions axiales des différents éléments mobiles 13a, 13b, 16a, 16b, et donc la correction d'usure qui en découle. On évite ou limite ainsi toute surcompensation ou sous-compensation de l'usure.

On notera que l'invention est également applicable aux embrayages de type normalement fermés.

## Revendications

1. Dispositif d'embrayage à rattrapage d'usure, notamment pour véhicule automobile, comportant :
- un plateau de réaction (4) destiné à être couplé en rotation à un arbre menant, autour d'un axe de rotation (X),
- un disque de friction (5a, 5b) portant des garnitures de friction, destiné à être couplé à un arbre mené,
- un plateau de pression (3a, 3b) actionné par un diaphragme (9a, 9b) de façon à serrer ou libérer le disque de friction (5a, 5b) sur le plateau de réaction (4),
- des moyens de détection et de rattrapage d'usure, aptes à rattraper l'usure du disque de friction (5a, 5b), les moyens de détection et de rattrapage d'usure étant intercalés entre une partie (6) fixe par rapport au plateau de réaction (4), par exemple un couvercle (6), et le plateau de pression (3a, 3b), lesdits moyens de détection et de rattrapage d'usure comportant :
des moyens de rattrapage d'usure (13a, 13b) intercalés entre le diaphragme (9a, 9b) et ladite partie fixe (6) ou entre le diaphragme (9a, 9b) et le plateau de pression (3a, 3b), lesdits moyens de rattrapage d'usure comportant au moins un organe de rattrapage (13a, 13b) mobile dans une plage déterminée et comportant une rampe (14a, 14b) coopérant avec une contre-rampe (15a, 15b) tournée du côté de la partie fixe (6) ou du plateau de pression (3a, 3b), de façon à ajuster la distance entre le diaphragme (9a, 9b) et la partie fixe (6), ou respectivement entre le diaphragme (9a, 9b) et le plateau de pression (3a, 3b) et compenser l'usure correspondante en fonction de la position de la rampe (14a, 14b) par rapport à la contre-rampe (15a),
des moyens de détection de l'usure (16a, 16b) aptes à autoriser le déplacement dudit organe de rattrapage mobile (13a, 13b) en cas d'usure et aptes à empêcher un tel déplacement lorsque cette usure n'est pas suffisante, lesdits moyens de détection comportant au moins un organe de détection mobile (16a, 16b), dans une plage déterminée, par rapport à l'organe de rattrapage mobile (13a, 13b) et comportant une rampe (17a, 17b) coopérant avec une contre-rampe (15a, 15b) tournée du côté de la partie fixe (6) ou du plateau de pression (3b),
au moins un organe presseur (20a, 20b) venant contraindre au moins la rampe (17a, 17b) de l'organe de détection (16a, 16b) contre la contre-rampe associée (15a, 15b), l'organe presseur (20a, 20b) étant apte à coopérer avec une butée fixe (21a, 21b) de manière à libérer l'organe de détection (16a, 16b) lorsqu'une usure est détectée,
l'organe de rattrapage mobile (13a, 13b) étant sollicité de façon à se déplacer lorsque ledit organe de rattrapage mobile (13a, 13b) est libéré par le diaphragme (9a, 9b),
l'organe de détection mobile (16a, 16b) étant sollicité de façon à se déplacer et à rattraper, au moins en partie, le jeu (j1, j'1) entre celui-ci et l'organe presseur (20a, 20b), lorsque ledit organe de détection mobile (16a, 16b) est libéré par l'organe presseur (20a, 20b) et par le diaphragme (9a, 9b),
**caractérisé en ce qu'**il comporte un organe de butée (21a, 21b) relié à l'organe presseur (20a, 20b), l'organe de butée (21a, 21b) étant conçu pour écarter l'organe presseur (20a, 20b) de l'organe de détection (16a, 16b) et/ou de l'organe de rattrapage (13a, 13b) en cas d'usure, l'organe de butée (21a, 21b) étant relié à l'organe presseur (20a, 20b) dans une zone située radialement entre l'organe de détection (16a, 16b) et de l'organe de rattrapage (13a, 13b).

2. Dispositif d'embrayage selon la revendication 1, **caractérisé en ce que** l'organe de butée (21a, 21b) est relié à l'organe presseur (20a, 20b) dans une zone située radialement à mi-distance entre l'organe de détection (16a, 16b) et de l'organe de rattrapage (13a, 13b).

3. Dispositif d'embrayage selon la revendication 1, **caractérisé en ce que** l'organe presseur (20a, 20b) exerce un effort presseur réparti entre l'organe de détection (16a, 16b) et l'organe de rattrapage (13a, 13b) et la composante axiale de cet effort suivant l'axe X est appliquée sur un rayon d'application situé entre l'organe de détection (16a, 16b) et l'organe de rattrapage (13a, 13b).

4. Dispositif d'embrayage selon l'une des revendications 1 à 3, **caractérisé en ce que** l'organe de rattrapage mobile (13a, 13b) et l'organe de détection mobile (16a, 16b) sont concentriques.

5. Dispositif d'embrayage selon l'une des revendications 1 à 4, **caractérisé en ce que** l'organe de butée (21a, 21b) comporte une extrémité (23a, 23b) reliée à une partie fixe (6) ou mobile (7) du dispositif d'embrayage, et une extrémité (22a, 22b) reliée à l'organe presseur (20a, 20b).

6. Dispositif d'embrayage selon l'une des revendications 1 à 5, **caractérisé en ce que** l'organe de détection (16a, 16b) et l'organe de rattrapage (13a, 13b), de forme générale circulaire, comprennent au moins une zone (25) pourvue de renflements dans laquelle lesdits organes mobiles (13a, 13b, 16a, 16b) sont localement écartés l'un de l'autre dans la direction radiale, l'organe presseur (20a, 20b) venant appuyer sur les extrémités correspondantes des organes mobiles (13a, 13b, 16a, 16b) au niveau de ladite zone (25) pourvue de renflements.

7. Dispositif d'embrayage selon l'une des revendications 1 à 6, **caractérisé en ce que** l'extrémité (22a, 22b) de l'organe de butée (21a, 21b) qui est reliée à l'organe presseur (20a, 20b) est logée dans ladite zone (25) pourvue de renflements.

8. Dispositif d'embrayage selon l'une des revendications 1 à 7, **caractérisé en ce que** l'organe presseur comporte au moins une languette élastique (20a, 20b) dont une extrémité est apte à venir en appui sur l'organe de détection mobile (16a, 16b) ou sur l'organe de rattrapage mobile (13a, 13b) correspondant.

9. Double embrayage (1) à rattrapage d'usure, notamment pour véhicule automobile, **caractérisé en ce qu'**il comporte au moins un dispositif d'embrayage selon l'une des revendications 1 à 8, le double embrayage comportant :
- au moins un plateau de réaction (4) destiné à être couplé en rotation à un arbre menant,
- un premier et un second disques de friction (5a, 5b) portant des garnitures de friction, destinés à être couplés respectivement à un premier et un second arbre mené,
- un premier et un second plateau de pression (3a, 3b) actionnés respectivement par un premier et un second diaphragme (9a, 9b) de façon à serrer ou libérer le premier et le second disque de friction (5a, 5b) sur le plateau de réaction (4), le premier plateau de pression (3a) étant relié fixement à un couvercle (7) mobile en translation par rapport au plateau de réaction (4), et étant actionné par appui du premier diaphragme (9a) sur le couvercle mobile (7),
- un couvercle fixe (6), fixé au plateau de réaction (4) et logeant le second plateau de pression (3b), le second disque de friction (5b) et/ou le second diaphragme (9b),
- des premiers moyens de détection et de rattrapage d'usure, aptes à rattraper l'usure du premier disque de friction (5a), les premiers moyens de détection et de rattrapage d'usure étant montés entre le premier diaphragme (9a) et le couvercle fixe (6),
- des seconds moyens de détection et de rattrapage d'usure, aptes à rattraper l'usure du second disque de friction (5b), les seconds moyens de détection et de rattrapage d'usure étant montés entre le second diaphragme (9b) et le second plateau de pression (3b),
les premiers moyens de détection et de rattrapage d'usure et les seconds moyens de détection et de rattrapage d'usure comportant chacun :
des moyens de rattrapage d'usure (13a, 13b) intercalés entre le premier diaphragme (9a) et le couvercle fixe (6), ou respectivement entre le second diaphragme (9b) et le second plateau de pression (3b), lesdits moyens de rattrapage d'usure comportant au moins un organe de rattrapage (13a, 13b) mobile dans une plage déterminée et comportant une rampe (14a, 14b) coopérant avec une contre-rampe (15a, 15b) tournée du côté du couvercle fixe (6) ou du second plateau de pression (3b), de façon à ajuster la distance entre le premier diaphragme (9a) et le couvercle fixe (6), ou respectivement entre le second diaphragme (9b) et le second plateau de pression (3b) et compenser l'usure correspondante en fonction de la position de la rampe (14a, 14b) par rapport à la contre-rampe (15a),
des moyens de détection de l'usure (16a, 16b) aptes à autoriser le déplacement dudit organe de rattrapage mobile (13a, 13b) en cas d'usure et aptes à empêcher un tel déplacement lorsque cette usure n'est pas suffisante, lesdits moyens de détection comportant au moins un organe de détection mobile (16a, 16b), dans une plage déterminée, par rapport à l'organe de rattrapage mobile (13a, 13b) et comportant une rampe (17a, 17b) coopérant avec une contre-rampe (15a, 15b) tournée du côté du couvercle fixe (6) ou du second plateau de pression (3b),
au moins un organe presseur (20a, 20b) venant contraindre au moins la rampe (17a, 17b) de l'organe de détection (16a, 16b) contre la contre-rampe associée (15a, 15b), l'organe presseur (20a, 20b) étant apte à coopérer avec une butée fixe (21a, 21b) de manière à libérer l'organe de détection (16a, 16b) lorsqu'une usure est détectée,
l'organe de rattrapage mobile (13a, 13b) étant sollicité de façon à se déplacer lorsque ledit organe de rattrapage mobile (13a, 13b) est libéré par le premier diaphragme (9a) ou par le second diaphragme (9b),
l'organe de détection mobile (16a, 16b) étant sollicité de façon à se déplacer et à rattraper, au moins en partie, le jeu (j1, j'1) entre celui-ci et l'organe presseur (20a, 20b), lorsque ledit organe de détection mobile (16a, 16b) est libéré par l'organe presseur (20a, 20b) et par le premier diaphragme (9a) ou second diaphragme (9b),
un organe de butée (21a, 21b) étant relié à l'un au moins des organes presseurs (20a, 20b), l'organe de butée (21a, 21b) étant conçu pour écarter l'organe presseur (20a, 20b) de l'organe de détection (16a, 16b) et/ou de l'organe de rattrapage (13a, 13b) en cas d'usure, l'organe de butée (21a, 21b) étant relié à l'organe presseur (20a, 20b) dans une zone située entre l'organe de détection (16a, 16b) et de l'organe de rattrapage (13a, 13b), de préférence à mi-distance entre l'organe de détection (16a, 16b) et de l'organe de rattrapage (13a, 13b).

10. Double embrayage (1) selon la revendication 9, **caractérisé en ce que** le premier diaphragme (9a) ou le second diaphragme (9b) libère l'organe de détection mobile (16a, 16b) et empêche le déplacement de l'organe de rattrapage mobile (13a, 13b), en position totalement embrayée, et **en ce que** le premier diaphragme (9a) ou second diaphragme (9b) libère l'organe de rattrapage mobile (13a, 13b) et empêche le déplacement de l'organe de détection mobile (16a, 16b), en position totalement débrayée, le premier diaphragme (9a) ou le second diaphragme (9b) venant toujours en appui sur l'un au moins desdits organes mobiles (13a, 13b, 16a, 16b) entre ses positions totalement embrayée et totalement débrayée.

11. Double embrayage (1) selon la revendication 9 ou 10, **caractérisé en ce que** chaque organe de détection mobile (16a, 16b) se présente sous la forme d'un anneau comportant une extrémité apte à servir à l'appui du diaphragme (9a, 9b) correspondant et une extrémité comprenant au moins une rampe (14a, 14b) s'étendant circonférentiellement, coopérant avec la contre-rampe (15a, 15b) associée du côté du couvercle fixe (6) ou du second plateau de pression (3b).

12. Double embrayage (1) selon l'une des revendications 9 à 11, **caractérisé en ce que** chaque organe de rattrapage mobile (13a, 13b) se présente sous la forme d'un anneau comportant une extrémité apte à servir à l'appui du diaphragme correspondant (9a, 9b) et une extrémité comportant au moins une rampe (17a, 17b) s'étendant circonférentiellement, coopérant avec la contre-rampe associée (15a, 15b) tournée du côté du couvercle fixe (6) ou du second plateau de pression (3b).

13. Double embrayage (1) selon l'une des revendications 9 à 12, **caractérisé en ce que** l'organe de butée (21a, 21b) comporte une extrémité (23a, 23b) reliée au couvercle fixe (6) ou au couvercle mobile (7), et une extrémité (22a, 22b) reliée à l'organe presseur (20a, 20b).

14. Double embrayage (1) selon la revendication 13, **caractérisé en ce que** l'organe de butée (21a, 21b) comporte une extrémité (23a, 23b) apte à venir en appui sur le couvercle mobile (7) ou sur le couvercle fixe (6) en cas d'usure, et une extrémité (22a, 22b) fixée ou venant en appui sur l'organe presseur (20a, 20b).

15. Double embrayage (1) selon la revendication 13, **caractérisé en ce que** l'organe de butée (21a, 21b) comporte une extrémité (23a, 23b) fixée au couvercle mobile (7) ou au couvercle fixe (6) en cas d'usure, et une extrémité (22a, 22b) venant en appui sur l'organe presseur (20a, 20b).

## Patentansprüche

1. Kupplungsvorrichtung mit Verschleißnachstellung, insbesondere für ein Kraftfahrzeug, die aufweist:
- eine Reaktionsplatte (4), die dazu bestimmt ist, um eine Drehachse (X) mit einer Antriebswelle in Drehung gekoppelt zu werden,
- eine Reibbeläge tragende Reibscheibe (5a, 5b), die dazu bestimmt ist, mit einer Abtriebswelle gekoppelt zu werden,
- eine Druckplatte (3a, 3b), die von einer Membran (9a, 9b) betätigt wird, um die Reibscheibe (5a, 5b) auf der Reaktionsplatte (4) anzuziehen oder freizugeben,
- Einrichtungen zur Erfassung und Nachstellung von Verschleiß, die den Verschleiß der Reibscheibe (5a, 5b) nachstellen können, wobei die Einrichtungen zur Erfassung und Nachstellung von Verschleiß zwischen einen bezüglich der Reaktionsplatte (4) ortsfesten Teil (6), zum Beispiel einen Deckel (6), und die Druckplatte (3a, 3b) eingelegt werden können, wobei die Einrichtungen zur Erfassung und Nachstellung von Verschleiß aufweisen:
Verschleißnachstelleinrichtungen (13a, 13b), die zwischen die Membran (9a, 9b) und den ortsfesten Teil (6) oder zwischen die Membran (9a, 9b) und die Druckplatte (3a, 3b) eingelegt werden, wobei die Verschleißnachstelleinrichtungen mindestens ein Nachstellelement (13a, 13b) aufweisen, das in einem bestimmten Bereich beweglich ist und eine Rampe (14a, 14b) aufweist, die mit einer Gegenrampe (15a, 15b) zusammenwirkt, die zur Seite des ortsfesten Teils (6) oder der Druckplatte (3a, 3b) weist, um den Abstand zwischen der Membran (9a, 9b) und dem ortsfesten Teil (6) bzw. zwischen der Membran (9a, 9b) und der Druckplatte (3a, 3b) einzustellen und den entsprechenden Verschleiß abhängig von der Stellung der Rampe (14a, 14b) bezüglich der Gegenrampe (15a) zu kompensieren, Erfassungseinrichtungen des Verschleißes (16a, 16b), die die Verschiebung des beweglichen Nachstellelements (13a, 13b) im Fall eines Verschleißes erlauben und eine solche Verschiebung verhindern können, wenn dieser Verschleiß nicht ausreichend ist, wobei die Erfassungseinrichtungen mindestens ein Erfassungselement (16a, 16b) aufweisen, das in einem bestimmten Bereich bezüglich des beweglichen Nachstellelements (13a, 13b) beweglich ist und eine Rampe (17a, 17b) aufweist, die mit einer Gegenrampe (15a, 15b) zusammenwirkt, die zur Seite des ortsfesten Teils (6) oder der Druckplatte (3b) weist,
mindestens ein Presselement (20a, 20b), das mindestens die Rampe (17a, 17b) des Erfassungselements (16a, 16b) gegen die zugeordnete Gegenrampe (15a, 15b) zwingt, wobei das Presselement (20a, 20b) mit einem ortsfesten Anschlag (21a, 21b) zusammenwirken kann, um das Erfassungselement (16a, 16b) freizugeben, wenn ein Verschleiß erfasst wird, wobei das bewegliche Nachstellelement (13a, 13b) so beaufschlagt wird, dass es sich verschiebt, wenn das bewegliche Nachstellelement (13a, 13b) von der Membran (9a, 9b) freigegeben wird,
wobei das bewegliche Erfassungselement (16a, 16b) so beaufschlagt wird, dass es sich verschiebt und zumindest zum Teil das Spiel (j1, j'1) zwischen diesem und dem Presselement (20a, 20b) nachstellt, wobei das bewegliche Erfassungselement (16a, 16b) vom Presselement (20a, 20b) und von der Membran (9a, 9b) freigegeben wird,
**dadurch gekennzeichnet, dass** sie ein mit dem Presselement (20a, 20b) verbundenes Anschlagelement (21a, 21b) aufweist, wobei das Anschlagelement (21a, 21b) konzipiert ist, das Presselement (20a, 20b) im Fall eines Verschleißes vom Erfassungselement (16a, 16b) und/oder vom Nachstellelement (13a, 13b) zu entfernen, wobei das Anschlagelement (21a, 21b) mit dem Presselement (20a, 20b) in einem Bereich verbunden ist, der sich radial zwischen dem Erfassungselement (16a, 16b) und dem Nachstellelement (13a, 13b) befindet.

2. Kupplungsvorrichtung nach Anspruch 1, **dadurch gekennzeichnet, dass** das Anschlagelement (21a, 21b) mit dem Presselement (20a, 20b) in einem Bereich verbunden ist, der sich radial auf halbem Weg zwischen dem Erfassungselement (16a, 16b) und dem Nachstellelement (13a, 13b) befindet.

3. Kupplungsvorrichtung nach Anspruch 1, **dadurch gekennzeichnet, dass** das Presselement (20a, 20b) eine Presskraft ausübt, die zwischen dem Erfassungselement (16a, 16b) und dem Nachstellelement (13a, 13b) verteilt ist, und die axiale Komponente dieser Kraft entlang der Achse X auf einen Anwendungsradius angewendet wird, der sich zwischen dem Erfassungselement (16a, 16b) und dem Nachstellelement (13a, 13b) befindet.

4. Kupplungsvorrichtung nach einem der Ansprüche 1 bis 3, **dadurch gekennzeichnet, dass** das bewegliche Nachstellelement (13a, 13b) und das bewegliche Erfassungselement (16a, 16b) konzentrisch sind.

5. Kupplungsvorrichtung nach einem der Ansprüche 1 bis 4, **dadurch gekennzeichnet, dass** das Anschlagelement (21a, 21b) ein mit einem ortsfesten (6) oder beweglichen Teil (7) der Kupplungsvorrichtung verbundenes Ende (23a, 23b) und ein mit dem Presselement (20a, 20b) verbundenes Ende (22a, 22b) aufweist.

6. Kupplungsvorrichtung nach einem der Ansprüche 1 bis 5, **dadurch gekennzeichnet, dass** das Erfassungselement (16a, 16b) und das Nachstellelement (13a, 13b), allgemein kreisförmig, mindestens einen mit Verdickungen versehenen Bereich (25) enthalten, in dem die beweglichen Elemente (13a, 13b, 16a, 16b) in radialer Richtung lokal voneinander entfernt sind, wobei das Presselement (20a, 20b) im Bereich des mit Verdickungen versehenen Bereichs (25) auf die entsprechenden Enden der beweglichen Elemente (13a, 13b, 16a, 16b) drückt.

7. Kupplungsvorrichtung nach einem der Ansprüche 1 bis 6, **dadurch gekennzeichnet, dass** das mit dem Presselement (20a, 20b) verbundene Ende (22a, 22b) des Anschlagelements (21a, 21b) in dem mit Verdickungen versehenen Bereich (25) untergebracht ist.

8. Kupplungsvorrichtung nach einem der Ansprüche 1 bis 7, **dadurch gekennzeichnet, dass** das Presselement mindestens eine elastische Zunge (20a, 20b) aufweist, von der ein Ende sich auf das bewegliche Erfassungselement (16a, 16b) oder auf das entsprechende bewegliche Nachstellelement (13a, 13b) auflegen kann.

9. Doppelkupplung (1) mit Verschleißnachstellung, insbesondere für ein Kraftfahrzeug, **dadurch gekennzeichnet, dass** sie mindestens eine Kupplungsvorrichtung nach einem der Ansprüche 1 bis 8 aufweist, wobei die Doppelkupplung aufweist:
- mindestens eine Reaktionsplatte (4), die dazu bestimmt ist, in Drehung mit einer Antriebswelle gekoppelt zu werden,
- eine erste und eine zweite Reibbeläge tragende Reibscheibe (5a, 5b), die dazu bestimmt sind, mit einer ersten bzw. einer zweiten Abtriebswelle gekoppelt zu werden,
- eine erste und eine zweite Druckplatte (3a, 3b), die von einer ersten bzw. zweiten Membran (9a, 9b) betätigt werden, um die erste und die zweite Reibscheibe (5a, 5b) auf die Reaktionsplatte (4) anzuziehen oder freizugeben, wobei die erste Druckplatte (3a) fest mit einem Deckel (7) verbunden ist, der bezüglich der Reaktionsplatte (4) translationsbeweglich ist, und durch Drücken der ersten Membran (9a) auf den beweglichen Deckel (7) betätigt wird,
- einen ortsfesten Deckel (6), der an der Reaktionsplatte (4) befestigt ist und in dem die zweite Druckplatte (3b), die zweite Reibscheibe (5b) und/oder die zweite Membran (9b) untergebracht sind,
- erste Einrichtungen zur Erfassung und Nachstellung von Verschleiß, die den Verschleiß der ersten Reibscheibe (5a) nachstellen können, wobei die ersten Einrichtungen zur Erfassung und Nachstellung von Verschleiß zwischen die erste Membran (9a) und den ortsfesten Deckel (6) montiert sind,
- zweite Einrichtungen zur Erfassung und Nachstellung von Verschleiß, die den Verschleiß der zweiten Reibscheibe (5b) nachstellen können, wobei die zweiten Einrichtungen zur Erfassung und Nachstellung von Verschleiß zwischen die zweite Membran (9b) und die zweite Druckplatte (3b) montiert sind,
wobei die ersten Einrichtungen zur Erfassung und Nachstellung von Verschleiß und die zweiten Einrichtungen zur Erfassung und Nachstellung von Verschleiß je aufweisen:
Verschleißnachstelleinrichtungen (13a, 13b), die zwischen die erste Membran (9a) und den ortsfesten Deckel (6) bzw. zwischen die zweite Membran (9b) und die zweite Druckplatte (3b) eingelegt sind, wobei die Verschleißnachstelleinrichtungen mindestens ein Nachstellelement (13a, 13b) aufweisen, das in einem bestimmten Bereich beweglich ist und eine Rampe (14a, 14b) aufweist, die mit einer Gegenrampe (15a, 15b) zusammenwirkt, die zur Seite des ortsfesten Deckels (6) oder der zweiten Druckplatte (3b) weist, um den Abstand zwischen der ersten Membran (9a) und dem ortsfesten Deckel (6) bzw. zwischen der zweiten Membran (9b) und der zweiten Druckplatte (3b) einzustellen und den entsprechenden Verschleiß abhängig von der Stellung der Rampe (14a, 14b) bezüglich der Gegenrampe (15a) zu kompensieren,
Erfassungseinrichtungen des Verschleißes (16a, 16b), die die Verschiebung des beweglichen Nachstellelements (13a, 13b) im Fall eines Verschleißes erlauben und eine solche Verschiebung verhindern können, wenn dieser Verschleiß nicht ausreichend ist, wobei die Erfassungseinrichtungen mindestens ein Erfassungselement (16a, 16b) aufweisen, das in einem bestimmten Bereich bezüglich des beweglichen Nachstellelements (13a, 13b) beweglich ist und eine Rampe (17a, 17b) aufweist, die mit einer Gegenrampe (15a, 15b) zusammenwirkt, die zur Seite des ortsfesten Deckels (6) oder der zweiten Druckplatte (3b) weist,
wobei mindestens ein Presselement (20a, 20b) mindestens die Rampe (17a, 17b) des Erfassungselements (16a, 16b) gegen die zugeordnete Gegenrampe (15a, 15b) zwingt, wobei das Presselement (20a, 20b) mit einem ortsfesten Anschlag (21a, 21b) zusammenwirken kann, um das Erfassungselement (16a, 16b) freizugeben, wenn ein Verschleiß erfasst wird,
wobei das bewegliche Nachstellelement (13a, 13b) beaufschlagt wird, um sich zu verschieben, wenn das bewegliche Nachstellelement (13a, 13b) von der ersten Membran (9a) oder von der zweiten Membran (9b) freigegeben wird,
wobei das bewegliche Erfassungselement (16a, 16b) beaufschlagt wird, um sich zu verschieben und um das Spiel (j1, j'1) zwischen diesem und dem Presselement (20a, 20b) zumindest teilweise nachzustellen, wenn das bewegliche Erfassungselement (16a, 16b) vom Presselement (20a, 20b) und von der ersten Membran (9a) oder der zweiten Membran (9b) freigegeben wird,
wobei ein Anschlagelement (21a, 21b) mit mindestens einem der Presselemente (20a, 20b) verbunden ist, wobei das Anschlagelement (21a, 21b) konzipiert ist, das Presselement (20a, 20b) im Fall eines Verschleißes vom Erfassungselement (16a, 16b) und/oder vom Nachstellelement (13a, 13b) zu entfernen, wobei das Anschlagelement (21a, 21b) mit dem Presselement (20a, 20b) in einem Bereich verbunden ist, der sich zwischen dem Erfassungselement (16a, 16b) und dem Nachstellelement (13a, 13b) befindet, vorzugsweise auf halbem Weg zwischen dem Erfassungselement (16a, 16b) und dem Nachstellelement (13a, 13b).

10. Doppelkupplung (1) nach Anspruch 9, **dadurch gekennzeichnet, dass** die erste Membran (9a) oder die zweite Membran (9b) das bewegliche Erfassungselement (16a, 16b) freigibt und die Verschiebung des beweglichen Nachstellelements (13a, 13b) in der ganz gekuppelten Stellung verhindert, und dass die erste Membran (9a) oder die zweite Membran (9b) das bewegliche Nachstellelement (13a, 13b) freigibt und die Verschiebung des beweglichen Erfassungselements (16a, 16b) in der ganz entkuppelten Stellung verhindert, wobei die erste Membran (9a) oder die zweite Membran (9b) zwischen ihren ganz gekuppelten und ganz entkuppelten Stellungen immer auf mindestens einem der beweglichen Elemente (13a, 13b, 16a, 16b) in Auflage kommt.

11. Doppelkupplung (1) nach Anspruch 9 oder 10, **dadurch gekennzeichnet, dass** jedes bewegliche Erfassungselement (16a, 16b) in Form eines Rings vorliegt, der ein Ende, das als Auflage für die entsprechende Membran (9a, 9b) dienen kann, und ein Ende aufweist, das mindestens eine sich in Umfangsrichtung erstreckende Rampe (14a, 14b) enthält, die mit der zugeordneten Gegenrampe (15a, 15b) auf der Seite des ortsfesten Deckels (6) oder der zweiten Druckplatte (3b) zusammenwirkt.

12. Doppelkupplung (1) nach einem der Ansprüche 9 bis 11, **dadurch gekennzeichnet, dass** jedes bewegliche Nachstellelement (13a, 13b) in Form eines Rings vorliegt, der ein Ende, das als Auflage für die entsprechende Membran (9a, 9b) dienen kann, und ein Ende aufweist, das mindestens eine sich in Umfangsrichtung erstreckende Rampe (17a, 17b) aufweist, die mit der zugeordneten Gegenrampe (15a, 15b) zusammenwirkt, die zur Seite des ortsfesten Deckels (6) oder der zweiten Druckplatte (3b) weist.

13. Doppelkupplung (1) nach einem der Ansprüche 9 bis 12, **dadurch gekennzeichnet, dass** das Anschlagelement (21a, 21b) ein Ende (23a, 23b), das mit dem ortsfesten Deckel (6) oder dem beweglichen Deckel (7) verbunden ist, und ein Ende (22a, 22b) aufweist, das mit dem Presselement (20a, 20b) verbunden ist.

14. Doppelkupplung (1) nach Anspruch 13, **dadurch gekennzeichnet, dass** das Anschlagelement (21a, 21b) ein Ende (23a, 23b), das sich im Fall eines Verschleißes auf den beweglichen Deckel (7) oder auf den ortsfesten Deckel (6) auflegen kann, und ein Ende (22a, 22b) aufweist, das am Presselement (20a, 20b) befestigt ist oder sich darauf auflegt.

15. Doppelkupplung (1) nach Anspruch 13, **dadurch gekennzeichnet, dass** das Anschlagelement (21a, 21b) ein Ende (23a, 23b), das im Fall eines Verschleißes am beweglichen Deckel (7) oder am ortsfesten Deckel (6) befestigt ist, und ein Ende (22a, 22b) aufweist, das sich auf das Presselement (20a, 20b) auflegt.

## Claims

1. Clutch device with compensation for wear, notably for a motor vehicle, comprising:
- a reaction plate (4) intended to be coupled in terms of rotation to a driving shaft, about an axis of rotation (X),
- a friction disc (5a, 5b) bearing friction linings, which is intended to be coupled to a driven shaft,
- a pressure plate (3a, 3b) actuated by a diaphragm (9a, 9b) so as to clamp or free the friction disc (5a, 5b) against the reaction plate (4),
- wear detection and compensation means able to compensate for wear of the friction disc (5a, 5b), the wear detection and compensation means being interposed between a part (6) that is fixed with respect to the reaction plate (4), for example a housing (6), and the pressure plate (3a, 3b), the said wear detection and compensation means comprising:
wear compensation means (13a, 13b) interposed between the diaphragm (9a, 9b) and the said fixed part (6) or between the diaphragm (9a, 9b) and the pressure plate (3a, 3b), the said wear compensation means comprising at least one compensation member (13a, 13b) able to move in a determined range and comprising a ramp (14a, 14b) collaborating with a mating ramp (15a, 15b) facing towards the fixed part (6) or towards the pressure plate (3a, 3b) so as to adjust the distance between the diaphragm (9a, 9b) and the fixed part (6) or, respectively, between the diaphragm (9a, 9b) and the pressure plate (3a, 3b) and compensate for the corresponding wear according to the position of the ramp (14a, 14b) with respect to the mating ramp (15a),
wear detection means (16a, 16b) able to allow the said mobile compensation member (13a, 13b) to move in the event of wear and able to prevent such a movement when this wear is not sufficient, the said detection means comprising at least one detection member (16a, 16b) able to move in a determined range with respect to the mobile compensation member (13a, 13b) and comprising a ramp (17a, 17b) collaborating with a mating ramp (15a, 15b) facing towards the fixed part (6) or the pressure plate (3b),
at least one pressing member (20a, 20b) forcing at least the ramp (17a, 17b) of the detection member (16a, 16b) against the associated mating ramp (15a, 15b), the pressing member (20a, 20b) being able to collaborate with a fixed end stop (21a, 21b) so as to free the detection member (16a, 16b) when wear is detected,
the mobile compensation member (13a, 13b) being urged to move when the said mobile compensation member (13a, 13b) is freed by the diaphragm (9a, 9b),
the mobile detection member (16a, 16b) being urged to move and to compensate, at least in part, for the play (j1, j'1) between it and the pressing member (20a, 20b) when the said mobile detection member (16a, 16b) is freed by the pressing member (20a, 20b) and by the diaphragm (9a, 9b),
**characterized in that** it comprises an end stop member (21a, 21b) connected to the pressing member (20a, 20b), the end stop member (21a, 21b) being designed to move the pressing member (20a, 20b) away from the detection member (16a, 16b) and/or from the compensation member (13a, 13b) in the event of wear, the end stop member (21a, 21b) being connected to the pressing member (20a, 20b) in a zone situated radially between the detection member (16a, 16b) and the compensation member (13a, 13b).

2. Clutch device according to Claim 1, **characterized in that** the end stop member (21a, 21b) is connected to the pressing member (20a, 20b) in a zone situated radially midway between the detection member (16a, 16b) and the compensation member (13a, 13b).

3. Clutch device according to Claim 1, **characterized in that** the pressing member (20a, 20b) exerts a pressing force that is distributed between the detection member (16a, 16b) and the compensation member (13a, 13b) and the axial component of this force along the axis X is applied to a radius of application situated between the detection member (16a, 16b) and the compensation member (13a, 13b).

4. Clutch device according to one of Claims 1 to 3, **characterized in that** the mobile compensation member (13a, 13b) and the mobile detection member (16a, 16b) are concentric.

5. Clutch device according to one of Claims 1 to 4, **characterized in that** the end stop member (21a, 21b) comprises one end (23a, 23b) connected to a fixed (6) or mobile (7) part of the clutch device and one end (22a, 22b) connected to the pressing member (20a, 20b).

6. Clutch device according to one of Claims 1 to 5, **characterized in that** the detection member (16a, 16b) and the compensation member (13a, 13b), of circular overall shape, comprise at least one zone (25) provided with bulges in which zone the said mobile members (13a, 13b, 16a, 16b) are locally parted from one another in the radial direction, the pressing member (20a, 20b) coming to press against the corresponding ends of the mobile members (13a, 13b, 16a, 16b) in the said zone (25) provided with bulges.

7. Clutch device according to one of Claims 1 to 6, **characterized in that** the end (22a, 22b) of the end stop member (21a, 21b) which is connected to the pressing member (20a, 20b) is housed in the said zone (25) provided with bulges.

8. Clutch device according to one of Claims 1 to 7, **characterized in that** the pressing member comprises at least one elastic finger (20a, 20b) one end of which is able to come to press against the mobile detection member (16a, 16b) or against the corresponding mobile compensation member (13a, 13b).

9. Dual clutch (1) with compensation for wear, notably for a motor vehicle, **characterized in that** it comprises at least one clutch device according to one of Claims 1 to 8, the dual clutch comprising:
- at least one reaction plate (4) intended to be rotationally coupled to a driving shaft,
- a first and a second friction disc (5a, 5b) bearing friction linings, which are intended to be coupled respectively to a first and to a second driven shaft,
- a first and a second pressure plate (3a, 3b) which are respectively actuated by a first and a second diaphragm (9a, 9b) so as to clamp or free the first and second friction disc (5a, 5b) against the reaction plate (4), the first pressure plate (3a) being fixedly connected to a housing (7) capable of translational movement with respect to the reaction plate (4) and being actuated by the first diaphragm (9a) pressing against the mobile housing (7),
- a fixed housing (6), fixed to the reaction plate (4) and housing the second pressure plate (3b), the second friction disc (5b) and/or the second diaphragm (9b),
- first wear detection and compensation means able to compensate for wear of the first friction disc (5a), the first wear detection and compensation means being mounted between the first diaphragm (9a) and the fixed housing (6),
- second wear detection and compensation means able to compensate for wear of the second friction disc (5b), the second wear detection and compensation means being mounted between the second diaphragm (9b) and the second pressure plate (3b),
the first wear detection and compensation means and the second wear detection and compensation means each comprising:
wear compensation means (13a, 13b) interposed between the first diaphragm (9a) and the fixed housing (6) or, respectively, between the second diaphragm (9b) and the second pressure plate (3b), the said wear compensation means comprising at least one compensation member (13a, 13b) able to move in a determined range and comprising a ramp (14a, 14b) collaborating with a mating ramp (15a, 15b) facing towards the fixed housing (6) or towards the second pressure plate (3b), so as to adjust the distance between the first diaphragm (9a) and the fixed housing (6) or, respectively, between the second diaphragm (9b) and the second pressure plate (3b) and compensate for corresponding wear according to the position of the ramp (14a, 14b) with respect to the mating ramp (15a),
wear detection means (16a, 16b) able to allow the said mobile compensation member (13a, 13b) to move in the event of wear and able to prevent such a movement when this wear is not sufficient, the said detection means comprising at least one detection member (16a, 16b) able to move in a determined range with respect to the mobile compensation member (13a, 13b) and comprising a ramp (17a, 17b) collaborating with a mating ramp (15a, 15b) facing towards the fixed housing (6) or towards the second pressure plate (3b),
at least one pressing member (20a, 20b) forcing at least the ramp (17a, 17b) of the detection member (16a, 16b) against the associated mating ramp (15a, 15b), the pressing member (20a, 20b) being able to collaborate with a fixed end stop (21a, 21b) so as to free the detection member (16a, 16b) when wear is detected,
the mobile compensation member (13a, 13b) being urged to move when the said mobile compensation member (13a, 13b) is freed by the first diaphragm (9a) or by the second diaphragm (9b),
the mobile detection member (16a, 16b) being urged to move and to compensate, at least in part, for the play (j1, j'1) between it and the pressing member (20a, 20b) when the said mobile detection member (16a, 16b) is freed by the pressing member (20a, 20b) and by the first diaphragm (9a) or second diaphragm (9b),
an end stop member (21a, 21b) being connected to at least one of the pressing members (20a, 20b), the end stop member (21a, 21b) being designed to move the pressing member (20a, 20b) away from the detection member (16a, 16b) and/or from the compensation member (13a, 13b) in the event of wear, the end stop member (21a, 21b) being connected to the pressing member (20a, 20b) in a zone situated between the detection member (16a, 16b) and the compensation member (13a, 13b), preferably midway between the detection member (16a, 16b) and the compensation member (13a, 13b).

10. Dual clutch (1) according to Claim 9, **characterized in that** the first diaphragm (9a) or the second diaphragm (9b) frees the mobile detection member (16a, 16b) and prevents movement of the mobile compensation member (13a, 13b) in the fully-engaged position, and **in that** the first diaphragm (9a) or second diaphragm (9b) frees the mobile compensation member (13a, 13b) and prevents movement of the mobile detection member (16a, 16b) in the fully-released position, the first diaphragm (9a) or the second diaphragm (9b) always coming to bear against at least one of the said mobile members (13a, 13b, 16a, 16b) between the fully-engaged and fully-released positions thereof.

11. Dual clutch (1) according to Claim 9 or 10, **characterized in that** each mobile detection member (16a, 16b) takes the form of an annulus comprising an end able to come to press against the corresponding diaphragm (9a, 9b) and an end comprising at least one circumferentially extending ramp (14a, 14b) collaborating with the associated mating ramp (15a, 15b) on the side of the fixed housing (6) or of the second pressure plate (3b).

12. Dual clutch (1) according to one of Claims 9 to 11, **characterized in that** each mobile compensation member (13a, 13b) takes the form of an annulus comprising an end able to come to press against the corresponding diaphragm (9a, 9b) and an end comprising at least one circumferentially extending ramp (17a, 17b) collaborating with the associated mating ramp (15a, 15b) facing towards the fixed housing (6) or the second pressure plate (3b).

13. Dual clutch (1) according to one of Claims 9 to 12, **characterized in that** the end stop member (21a, 21b) has one end (23a, 23b) connected to the fixed housing (6) or to the mobile housing (7) and one end (22a, 22b) connected to the pressing member (20a, 20b).

14. Dual clutch (1) according to Claim 13, **characterized in that** the end stop member (21a, 21b) comprises one end (23a, 23b) able to come to bear against the mobile housing (7) or against the fixed housing (6) in the event of wear, and one end (22a, 22b) that is fixed to or comes to press against the pressing member (20a, 20b).

15. Dual clutch (1) according to Claim 13, **characterized in that** the end stop member (21a, 21b) has one end (23a, 23b) fixed to the mobile housing (7) or to the fixed housing (6) in the event of wear, and one end (22a, 22b) that comes to press against the pressing member (20a, 20b).
